(19)

**Europäisches Patentamt**
**European Patent Office**
**Office européen des brevets**

(11) **EP 1 994 982 A1**

(12) **EUROPEAN PATENT APPLICATION**

(43) Date of publication:
**26.11.2008 Bulletin 2008/48**

(51) Int Cl.:
*B01J 21/04* (2006.01)　　*B01J 23/58* (2006.01)
*B01J 23/63* (2006.01)　　*B01J 23/66* (2006.01)
*B01J 29/08* (2006.01)　　*B01J 35/00* (2006.01)
*B01J 37/34* (2006.01)　　*B01D 53/00* (2006.01)
*B01J 29/14* (2006.01)

(21) Application number: **08006037.9**

(22) Date of filing: **28.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.03.2007　JP 2007091927**

(71) Applicant: **FUJIFILM CORPORATION**
**Minato-ku**
**Tokyo 106-8620 (JP)**

(72) Inventors:
• **Tomita, Tadabumi**
  **Haibara-gun, Shizuoka (JP)**
• **Uesugi, Akio**
  **Haibara-gun, Shizuoka (JP)**
• **Hotta, Yoshinori**
  **Haibara-gun, Shizuoka (JP)**
• **Hatanaka, Yusuke**
  **Haibara-gun, Shizuoka (JP)**

(74) Representative: **HOFFMANN EITLE**
**Patent- und Rechtsanwälte**
**Arabellastrasse 4**
**81925 München (DE)**

(54) **Catalyst body which uses an anodized layer**

(57) A catalyst body includes an anodized aluminum layer having micropores thereon and inside the micropores are supported at least one element selected from among potassium (K), barium (Ba), lanthanum (La), calcium (Ca), lithium (Li), cerium (Ce), zirconium (Zr), praseodymium (Pr), neodymium (Nd), terbium (Te), samarium (Sm) and gadolinium (Gd), and at least one element selected from among palladium (Pd), platinum (Pt), rhodium (Rh), ruthenium (Ru), iridium (Ir), silver (Ag) and gallium (Ga). When used as a catalyst, the catalyst body exhibits an activity even at low temperatures, uses only a small amount of precious metal and has the desirable effect of lowering the level of nitrogen oxides emitted from diesel engines and other emission sources.

FIG.1

EP 1 994 982 A1

**Description**

TECHNICAL FIELD

The present invention relates to a catalyst for treating nitrogen oxides in exhaust gases, and more particularly to a catalyst body comprising an anodized aluminum layer. The catalyst body of the invention may be used in an emission control system for reducing the level of nitrogen oxides in exhaust gases.

RELATED BACKGROUND ART

Diesel engines provide a number of user advantages relative to gasoline engines, including higher combustion efficiency and high power (e.g., torque) performance. Moreover, carbon dioxide ($CO_2$) and hydrocarbon (CH) levels in the exhaust are from 10 to 50% and are lower than for gasoline-powered vehicles. As restrictions are being placed on total carbon dioxide emissions due to concerns today over global warming, a fresh look is being taken at diesel engines.

On the other hand, diesel engines also have drawbacks. Compared with gasoline engines, the levels of environmental pollutants such as particulate matter (PM) and the soluble organic fraction (SOF) made up of unburned fuel, lubricating oil and sulfur compounds are higher than for gasoline-powered vehicles. In addition, the diesel exhaust contains carbon monoxide (CO), CH and nitrogen oxides (NOx).

Technological developments to clean up such exhaust gas emissions have been eagerly awaited. With regard to particulate matter, numerous methods for capturing particulates with ceramic filters called diesel particulate filters (DPF) are in use today. Because DPF filters clog up in a short period of time, JP 2001-276622 A describes a method in which an oxidation catalyst of platinum as the active species supported on a heat-resistant ceramic called cordierite is installed in front of the DPF filter. Nitrogen monoxide (NO) is reacted at the oxidation catalyst, forming nitrogen dioxide ($NO_2$) which is then used to convert the particulate matter (composed primarily of carbon) to carbon dioxide.

$$2NO_2 + C \rightarrow 2NO + CO_2$$

This approach is capable of eliminating particulate matter, but does not reduce the level of nitrogen oxides (NOx).

There are a number of difficulties with methods for removing nitrogen oxides from diesel engine exhaust.

(1) Because the diesel oil used as the fuel burns at an oxygen concentration of as high as at least 5%, components in the exhaust gas cannot be controlled by controlling oxygen intake. By contrast, in gasoline engines, component control by controlling the oxygen intake is possible.

(2) The level of particulate matter is 20 to 60 times that for gasoline engines, resulting in rapid degradation of the catalyst. (With a DPF filter, particulate matter can be reduced to a level comparable to that from a gasoline engine.)

(3) Because diesel fuels have higher levels of sulfur compounds and moisture than do gasoline, performance markedly declines due to poisoning of the catalyst.

(4) Because the temperature of the exhaust is lower than that from a gasoline-powered vehicle, catalyst activation does not occur. During low-speed travel in particular, the exhaust gases must be heated with a heater, which worsens fuel consumption.

It is known that, on account of these problems, the Pt-Pd-Rh ternary catalysts which are widely employed in gasoline vehicles cannot be used in diesel engines.

In this connection, a technology known as the $NH_3$-SCR system which is commonly used in, for example, municipal incinerators has been introduced recently, primarily in full-size cars. This technology employs a process in which cleanup is achieved by spraying urea onto a $V_2O_5$-$TiO_2$ ceramic to effect the following reaction:

$$NO + NO_2 + 2NH_3 \rightarrow 2N_2 + 3H_2O$$

When ammonia is used as the reducing agent, the ammonia reacts with sulfur oxides (SOx) in the exhaust gases, forming salts. As a result, the catalyst activity decreases at low temperatures. Furthermore, safety becomes a concern when such a system is used to treat NOx from mobile emission sources such as automobiles. In addition, owing to concerns over the toxicity and corrosiveness of ammonia and to the high cost of the equipment itself, this system is not widely used in ordinary passenger vehicle applications.

Accordingly, there has existed a need for the development of a catalyst which is capable of lowering the level of nitrogen oxides emitted by diesel engines.

The following systems which use catalysts to reduce nitrogen oxides and render them harmless are known as NOx removal systems for diesel engines.

JP 2000-8909 A discloses a catalyst composed of a substrate, a porous carrier layer made of $\gamma$-alumina (a NOx-storage material) which is formed on the substrate, and platinum supported on the carrier layer.

During lean combustion with excess air, $O_2^-$ or $O^{2-}$ oxygen ions and the NOx react on the catalyst to form nitrate ions $NO_3^-$. The nitrate ions $NO_3^-$ are adsorbed onto the surface of the catalyst, forming a nitrate salt. When the nitrate salt on the catalyst reaches a saturated state, it causes the internal combustion engine to run in a rich state for several seconds (this is referred to as a "rich spike"). By reacting the nitrate salt with unburned HC and CO present in the exhaust gases, the nitrate salt on the catalyst can be decomposed and reduced to $N_2$, $CO_2$ and $H_2O$, and thereby eliminated.

JP 2001-276622 A discloses a method for supporting, in a NOx storing and reducing catalyst which has a NOx storage substance that stores nitrogen oxides when the air/fuel ratio is lean and releases nitrogen oxides when the air/ fuel ratio is rich and which reduces and cleans up NOx in exhaust gases, an oxygen storage substance having the ability to store and release oxygen. A substance having the ability to store nitrogen oxides, such as potassium, barium, lanthanum or calcium, is used here as the NOx storage substance, and a compound of cerium, zirconium or the like is used as the oxygen storage substance.

JP 2006-43533 A describes a method for durably reducing NOx in a broad temperature range, even in the presence of oxygen, sulfur oxides or water, and without producing harmful ammonia under rich conditions.

In this method for catalytically reducing nitrogen oxides in exhaust' gases, the catalyst has (A) an oxide catalyst component composed of (a) ceria, (b) praseodymium oxide, or (c) a mixture and/or composite oxide of the oxides of at least two elements selected from among cerium, zirconium, praseodymium, neodymium, terbium, samarium, gadolinium and lanthanum; and (B) a precious metal catalyst component composed of (d) at least one selected from among platinum, rhodium, palladium and oxides thereof.

JP 2006-183477 A describes an exhaust gas purifying apparatus which is able, by efficiently carrying out the production of ammonia and the reduction of NOx, to lower the proportion of the time during which the exhaust is in a reducing atmosphere and thereby avoid a decline in fuel economy. The apparatus is composed of an exhaust line which is provided with a catalyst that produces ammonia by reacting NOx in the exhaust gas with a reducing agent when the exhaust is in a reducing atmosphere. In addition, a NOx purifying unit which adsorbs NOx in the exhaust gas when the exhaust is in an oxidizing atmosphere is provided on the downstream side of the ammonia-producing catalyst. When the exhaust is in a reducing atmosphere, the unit reduces the adsorbed NOx and produces ammonia, then stores the resulting ammonia.

JP 2006-320893 A discloses an inexpensive catalyst for the selective reduction of nitrogen oxides, which catalyst can efficiently remove nitrogen oxides from exhaust gases even in the presence of a high concentration of oxygen and the like. The catalyst is prepared by anodizing aluminum so as to form an aluminum oxide layer on a substrate, and supporting silver on the aluminum oxide layer. Also described is a method for removing nitrogen oxides using such a catalyst. However, it is known that in city driving with a diesel-powered vehicle, 42% of exhaust gases are emitted at a temperature range of 50 to 150°C, and 12% of exhaust gases are emitted at a temperature range of 350°C or more. Hence, this technology does not provide a sufficient performance for applications which involve primarily city driving by buses and passenger cars.

DISCLOSURE OF THE INVENTION

In diesel-powered vehicles that are operated in urban areas in particular, due to frequent stopping, the primary temperature range of the exhaust line is thought to be about 150 to 250°C. The Pt-Pd-Rh ternary catalysts used in gasoline-powered vehicles are not activated at these temperatures and thus cannot be used. Accordingly, the object of the present invention is to provide a catalyst body which is active even at such relatively low temperatures and is capable of carrying out the removal of nitrogen oxides (NOx) with a catalyst that uses only a small amount of precious metal.

As a result of extensive investigations, the inventors have discovered that the above object can be achieved by using an anodized aluminum layer having micropores thereon.

Accordingly, the invention provides the following catalyst body.

(1) A catalyst body comprising an anodized aluminum layer having micropores thereon, wherein inside said micropores are supported, at least one element selected from the group consisting of potassium (K), barium (Ba), lanthanum (La), calcium (Ca), lithium (Li), cerium (Ce), zirconium (Zr), praseodymium (Pr), neodymium (Nd), terbium (Te), samarium (Sm) and gadolinium (Gd), and at least one element selected from the group consisting of palladium (Pd), platinum (Pt), rhodium (Rh), ruthenium (Ru), iridium (Ir), silver (Ag) and gallium (Ga).

(2) A catalyst body comprising an anodized aluminum layer with a thickness of less than 10 $\mu$m which has micropores thereon, wherein inside said micropores are supported, at least one element selected from the group consisting of potassium (K), barium (Ba), lanthanum (La), calcium (Ca), lithium (Li), cerium (Ce), zirconium (Zr), praseodymium (Pr), neodymium (Nd), terbium (Te), samarium (Sm) and gadolinium (Gd), and at least one element selected from the group consisting of palladium (Pd), platinum (Pt), rhodium (Rh), ruthenium (Ru), iridium (Ir), silver (Ag) and gallium (Ga).

(3) The catalyst body of (1) or (2) which further comprises, on the anodized aluminum layer, a material having the ability to adsorb ammonia.

(4) The catalyst body of any one of (1) to (3), wherein the ammonia-adsorbing material is a zeolite-containing porous material.

(5) The catalyst body of any one of (1) to (4), wherein the anodized aluminum layer is obtained by subjecting a substrate having aluminum on a surface thereof to graining treatment, followed by anodizing treatment.

(6) The catalyst body of any one of (1) to (5), wherein at least one element selected from the group consisting of palladium (Pd), platinum (Pt), rhodium (Rh), ruthenium (Ru), iridium (Ir), silver (Ag) and gallium (Ga) is supported in an amount, per unit thickness of the anodized layer of the catalyst body, of at least 0.15 $g/m^2/\mu m$.

(7) The catalyst body of any one of (1) to (6), wherein the ammonia-adsorbing material is provided as a layer by coating the anodized aluminum layer with a slurry containing a zeolite in combination with phosphoric acid and/or colloidal silica and/or boehmite sol.

(8) A NOx-removing catalyst body, comprising the catalyst body of any one of (1) to (7) in a form that is unchanged or has been rendered into pieces, folded, or reduced in size to small bodies.

When used as a catalyst, the catalyst body of the invention has the desirable effect of lowering the level of nitrogen oxides emitted from diesel engines and other emission sources. Compared with processes that have hitherto been employed, the amount of ammonia used as a reducing agent can be decreased or eliminated altogether. In contrast with the catalyst bodies that employ ceramic carriers made of alumina currently in common use, the catalyst body of the invention supports only a small amount of precious metal such as platinum, yet it has a high activity and exhibits an activity even at low temperatures.

BRIEF DESCRIPTION OF THE DIAGRAMS

In the accompanying drawings:

FIG. 1 is a cross-sectional view of an embodiment of the catalyst body of the invention;

FIG. 2 is a graph of a working curve of the weight of supported platinum versus the platinum level as determined with an electron probe microanalyzer;

FIG. 3 is a schematic view of the process of NOx adsorption to the catalyst body of the invention or reduction, with (A) showing the state during lean combustion and (B) showing the state at a stoichiometric air/fuel ratio;

FIG. 4 is a graph of the relationship between the excess air ratio ($\lambda$) and time; and

FIG. 5 is a schematic view of an apparatus for measuring the NOx removal ratio from diesel-powered vehicle exhaust by the catalyst body of the invention.

DESCRIPTION OF THE PREFERRED EMBODIMENTS

The catalyst body of the invention is composed of:

an anodized aluminum layer having micropores thereon and,

a metal or metal oxide having the ability to adsorb and store NOx and a metal or metal oxide having a catalytic activity which are supported inside the micropores.

The catalyst body further includes, on a surface of the anodized layer, a layer having the ability to adsorb ammonia.

It is preferable for the metal and/or metal oxide having the ability to adsorb NOx to be in physical contact with the metal and/or metal oxide having a catalytic activity.

The layer having the ability to adsorb ammonia need not be in physical contact with the metal and/or metal oxide having a catalytic activity, and is preferably made of a porous material having a porosity of from 30 to 90% for storing gas. Nor is it necessary to form a layer; the constituent compound may be deposited randomly at the interior of, or on top of, micropores in the anodized aluminum layer.

The catalyst body of the invention may be used as a catalyst for removing NOx.

When the catalyst body of the invention is used as a NOx removing catalyst, it is preferable for an ammonia-forming catalyst to be provided on the upstream side of the NOx purifying unit containing the inventive catalyst body. When the exhaust gases are in a reducing atmosphere (referred to as "rich-burn" or "rich state": a fuel-rich state at the time of startup and acceleration), the ammonia-forming catalyst reduces nitrogen dioxide ($NO_2$) via chemical reactions (1) and (2) below, thereby forming nitrogen ($N_2$), water ($H_2O$) and ammonia ($NH_3$).

$$2NO_2 + 4H_2 \rightarrow N_2 + 4H_2O \qquad (1)$$

$$2NO_2 + 7H_2 \rightarrow 2NH_3 + 4H_2O \qquad (2)$$

The ammonia-forming catalyst is composed of one or more precious metals selected from among palladium (Pd), platinum (Pt), rhodium (Rh), ruthenium (Ru) and iridium (Ir) supported on a heat-resistant porous carrier. Of these, it is desirable for the ammonia-forming catalyst to include a porous carrier and at least one precious metal selected from among Pt, Pd, Rh and Ru. Use may also be made of a commercial ternary catalyst or a catalyst designed to eliminate hydrocarbons at the time of engine startup (see JP 2001-132432 A).

The inventive catalyst body is a catalyst body composed of a micropore-bearing anodized layer obtained by subjecting a valve metal to anodizing treatment, and a metal with catalytic activity present within the micropores.

<Valve Metal>

Metals which exhibit the characteristic that their surface becomes covered by an oxide film thereof from anodizing treatment may be used as valve metals. Illustrative examples include aluminum, tantalum, niobium, titanium, hafnium, zirconium, zinc, tungsten, bismuth and antimony. Of these aluminum is preferred.

The aluminum is not subject to any particular limitation. Use may be made of an aluminum known to the art or an aluminum alloy containing aluminum as the chief component. Examples include pure aluminum plate, alloy plates composed primarily of aluminum and containing small amounts of other elements, and low-purity aluminum (e.g., recycled material).

In the present invention, the aluminum purity is preferably at least 99 wt%, more preferably at least 99.5 wt%, and even more preferably at least 99.9 wt%. JIS 1000 series aluminum plates are readily available as aluminum materials having such a level of purity. Specific examples include the materials of the JIS designations 1N00, 1200, 1100, 1N30, 1230, 1050, 1060, 1070, 1080, 1085, 1N90 and 1N99.

Examples of low-purity aluminum materials (e.g., recycled materials) that may be used include materials which do not readily incur a loss of strength even under high thermal loading at 500 to 550°C and have a high anodizing treatment homogeneity, such as materials of the JIS designations 3004 and 5021.

As noted in Keikinzoku 35, No. 63, p. 370, Figure 13 (1985), suitable use may also be made of materials which have been heat-treated at a temperature of from 300 to 600°C in an inert gas, thereby increasing the surface area ratio of the Al (100) crystal plane.

By carrying out such heat treatment and subsequently applying electrochemical graining treatment in a chlorine-containing aqueous electrolytic solution, it is possible to enhance the surface enlarging ratio.

The anodized layer may be formed by subjecting the valve metal to anodizing treatment. However, if necessary, degreasing treatment to clean the surface of the valve metal may be carried out prior to anodizing treatment. Other treatment steps that may be carried out include starting point-forming treatment to induce the formation of micropores at predetermined positions on the anodized layer, pore-widening treatment to enlarge the aperture of micropores in the anodized layer formed by anodizing treatment, and surface area enlarging treatment to increase the surface area. Each of these treatments is described below in examples where, for the sake of illustration, aluminum is used as the valve metal.

Although the shape of the metal substrate having aluminum at the surface is not subject to any particular limitation, the overall thickness of the metal substrate is preferably from 0.05 to 0.4 mm, more preferably from 0.08 to 0.35 mm, and even more preferably from 0.1 to 0.3 mm. The aluminum at the surface of the metal substrate has a thickness of preferably from 0.05 to 0.3 mm. The heat-resistant substrate has a thickness of preferably from 0.05 to 0.3 mm, and more preferably from 0.05 to 0.25 mm.

<Heat Treatment>

In the practice of the invention, when electrochemical graining treatment is carried out as the subsequently described graining treatment, it is desirable to first subject the aluminum substrate to heat treatment.

Heat treatment is carried out preferably at from 150 to 550°C for a period of from about 30 minutes to about 10 hours, more preferably at from 200 to 530°C for a period of from about 30 minutes to about 8 hours, and even more preferably at from 250 to 500°C for a period of from about 30 minutes to about 6 hours. To suppress the formation of a natural oxide film, it is preferable to carry out such heat treatment in an inert gas (e.g., argon, nitrogen). Examples of methods that may be used for this purpose include, specifically, a method in which the aluminum substrate is placed in a heating oven to which an inert gas can be introduced.

Although the detailed mechanism involved is not fully understood, it is commonly known that by carrying out such heat treatment, the crystal grains on the aluminum substrate become larger and the proportion of crystal planes in the [100] direction increases (see, for example, Keikinzoku 35, No. 6, pp. 365-371 (1985)).

<Degreasing>

In the present invention, for good uniformity of the treatment surface, it is preferable that the surface of the aluminum substrate to be administered the subsequently described anodizing treatment (A) first be subjected to degreasing treatment.

Degreasing is carried out with a suitable substance such as an acid, alkali or organic solvent so as to dissolve and remove organic substances, including dust, grease and resins, adhering to the surface of the aluminum substrate, and thereby prevent defects caused by organic substances from arising in each of the subsequent treatments.

A known degreaser may be used in degreasing treatment. For example, degreasing may be carried out using any of various commercially available degreasers by the prescribed method.

Preferred degreasing methods include the following: a method in which an organic solvent such as an alcohol (e.g., methanol), ketone (e.g., methyl ethyl ketone), petroleum benzin or volatile oil is contacted with the surface of the aluminum substrate at ambient temperature (organic solvent method); a method in which a liquid containing a surfactant such as soap or a neutral detergent is contacted with the surface of the aluminum substrate at a temperature of from ambient temperature to 80°C, after which the surface is rinsed with water (surfactant method); a method in which an aqueous sulfuric acid solution having a concentration of 10 to 200 g/L is contacted with the surface of the aluminum substrate at a temperature of from ambient temperature to 70°C for a period of 30 to 80 seconds, following which the surface is rinsed with water; a method in which an aqueous solution of sodium hydroxide having a concentration of 5 to 20 g/L is contacted with the surface of the aluminum substrate at ambient temperature for about 30 seconds while electrolysis is carried out by passing a direct current through the aluminum substrate surface as the cathode at a current density of 1 to 10 A/dm$^2$, following which the surface is contacted with an aqueous solution of nitric acid having a concentration of 100 to 500 g/L and thereby neutralized; a method in which the surface of the aluminum substrate is contacted with any of various known anodizing electrolytic solutions at ambient temperature while electrolysis is carried out by passing a direct current at a current density of 1 to 10 A/dm$^2$ or an alternating current through the aluminum substrate surface as the cathode; a method in which an alkaline aqueous solution having a concentration of 10 to 200 g/L is contacted with the surface of the aluminum substrate at 40 to 50°C for 15 to 60 seconds, following which the surface is contacted with an aqueous solution of nitric acid having a concentration of 100 to 500 g/L and thereby neutralized; a method in which an emulsion prepared by mixing a surfactant, water and the like into an oil such as gas oil or kerosene is contacted with the surface of the aluminum substrate at a temperature of from ambient temperature to 50°C, following which the surface is rinsed with water (emulsion degreasing method); and a method in which a mixed solution of, for example, sodium carbonate, phosphates and surfactant is contacted with the surface of the aluminum substrate at a temperature of ambient temperature to 50°C for 30 to 180 seconds, following which the surface is rinsed with water (phosphate method). The degreasing method is preferably one which can remove grease from the aluminum surface but causes substantially no aluminum dissolution. Hence, an organic solvent method, surfactant method, emulsion degreasing method or phosphate method is preferred. Of these, a surfactant method is especially preferred on account of the ready availability of the starting materials and the ease of wastewater treatment.

<Surface Area-Increasing Treatment>

(Graining Treatment)

In the practice of the invention, the aluminum substrate is administered graining treatment so as to further increase the surface area of the anodized layer itself and thereby impart higher performance as a functional material.

Examples of graining treatment include mechanical graining, chemical etching, and electrolytic graining such as those disclosed in JP 56-28893 A.

Specific examples include electrochemical graining (electrolytic graining) in which the surface is electrochemically grained in an electrolytic solution containing chloride ions or in an electrolytic solution of nitric acid; and mechanical graining such as wire brushing in which the surface of the aluminum substrate is scratched with metal wires, ball graining in which the surface of the aluminum substrate is grained with abrasive balls and an abrasive, and brush graining in which the surface is grained with a nylon brush and an abrasive.

Any one or combination of these graining methods may be used. For example, mechanical graining with a nylon brush and an abrasive may be combined with electrolytic graining in an electrolytic solution containing chloride ions or in an electrolytic solution of nitric acid, or a plurality of electrolytic graining treatments may be combined. Of the above, it is preferable to carry out electrolytic graining because the resulting aluminum substrate has an improved surface enlarging ratio, as measured by the BET method.

In the case of brush graining, the average depth of long-wavelength component (large-wave) recesses on the surface of the aluminum substrate can be controlled by appropriate selection of such conditions as the average and maximum particle sizes of the particles used as the abrasive, the diameter and density of the bristles on the brush, and the force with which the brush is pressed against the substrate.

The recesses obtained by brush graining have an average wavelength of preferably from 2 to 10 $\mu$m, and an average depth of preferably from 0.2 to 1 $\mu$m.

(Electrochemical Graining Treatment)

In electrochemical graining treatment, an alternating current is passed through the aluminum substrate in an acid-containing aqueous solution. The acid added to the aqueous solution is preferably hydrochloric acid. By carrying out electrochemical graining treatment using an aqueous solution containing hydrochloric acid (hydrochloric acid electrolytic graining treatment), pits having an average opening diameter of from 0.01 to 5 $\mu$m, and an average depth of from 0.01 to 10 $\mu$m are uniformly formed over the entire surface of the aluminum substrate.

The hydrochloric acid concentration in the aqueous solution is preferably from 1 to 10 wt%. Within the above range, the uniformity of pits formed on the surface of the aluminum substrate increases.

A preferred example of the electrolytic graining treatment is the above-described electrochemical process in which chemical graining is carried out in a chloride ion-containing electrolytic solution or in an electrolytic solution of nitric acid.

Specifically, electrolytic treatment is carried out at a temperature of from 20 to 100°C for a period of from 1 second to 30 minutes, for example, in an aqueous solution containing from 0.1 to 50 wt% of hydrochloric acid or NaCl, KCl, $CuCl_2$ or a mixture thereof, or in an electrolytic solution containing nitric acid. The amount of electricity at the anode is preferably at least 20 $C/dm^2$, more preferably from 20 to 10,000 $C/dm^2$, and even more preferably from 30 to 7,000 $C/dm^2$. Graining treatment is carried out using either a direct current or an alternating current. Examples of the power supply waveform that may be used in electrochemical graining treatment include, but are not limited to, direct current and sinusoidal, square, trapezoidal and triangular waveforms. The use of direct-current electrolysis at a current density of from 1 to 100 $A/dm^2$ is preferred. The use of alternating current is also possible, in which case a frequency in a range of from 1 to 200 Hz is preferred.

Specific examples of chloride ion-containing electrolytic solutions that may be used include aqueous solutions in which any of the following has been dissolved: hydrochloric acid, sodium chloride, potassium chloride, magnesium chloride, zinc chloride, aluminum chloride, ammonium chloride, calcium chloride, nitrogen chloride, sodium chloride, barium chloride and titanium chloride. Of these, hydrochloric acid and sodium chloride are preferable in terms of their ready availability and the ease of wastewater treatment.

The range in the concentration of chloride ions in the aqueous solution is preferably from 1 to 10 wt%, more preferably from 2 to 9 wt%, and even more preferably from 3 to 8 wt%.

The temperature range of the chloride ion-containing electrolytic solution is preferably from 25 to 90°C, more preferably from 40 to 85°C, and even more preferably from 60 to 80°C.

In addition, electrolysis with the chloride ion-containing electrolytic solution is preferably carried out using a direct current. For treatment on one side of the aluminum substrate, the current density is preferably in a range of from 1 to 12 $A/dm^2$, more preferably from 2 to 11 $A/dm^2$, and even more preferably from 3 to 10 $A/dm^2$. For treatment on both sides of the aluminum substrate, the current density is preferably in a range of from 2 to 24 $A/dm^2$, more preferably from 4 to 22 $A/dm^2$, and even more preferably from 6 to 20 $A/dm^2$.

The length of treatment time with a chloride ion-containing electrolytic solution is preferably from 1 to 15 minutes, more preferably from 2 to 12 minutes, and even more preferably from 3 to 10 minutes.

When electrolytic treatment is carried out using a chloride ion-containing electrolytic solution within the above ranges in the electrolysis conditions, it is possible to obtain an aluminum substrate having a uniformly high surface enlarging ratio over the entire surface. The reason is that the chloride ions are specifically adsorbed to [100] oriented crystal planes on the aluminum. Hence, when electrolysis is carried out in a chloride ion-containing electrolytic solution, electrolytic etching proceeds along the [100] oriented crystal planes of the aluminum, resulting in the formation of deep pits, and thus enabling a large improvement in the surface enlarging ratio of the aluminum substrate as measured by the BET method.

By carrying out such electrolytic graining treatment, it is easy to provide pits on the surface of the aluminum substrate, thereby further improving the surface enlarging ratio as measured by the BET method and thus making use in various applications possible.

Moreover, using such electrolytic graining treatment, crater-like, honeycomb-like or tunnel-like pits having an average diameter of from 0.1 to 5 $\mu$m and an average depth of from 0.05 to 50 $\mu$m can be formed on the surface of the aluminum substrate over a surface area ratio of from 90 to 100%.

It is also possible for graining treatment to consist only of carrying out electrolytic graining treatment without administering the above-described mechanical graining treatment.

Following graining treatment, the aluminum substrate preferably has a surface roughness which is characterized in that the arithmetical mean roughness (Ra), as measured according to JIS B0601-1994 at a cutoff of 0.8 mm and over a measurement length of 3.0 mm, is at least 0.2 $\mu$m.

(Alkali Etching Treatment)

In the practice of the invention, the aluminum substrate that has been roughened by the above-described graining treatment may also be chemically etched with an alkali.

Alkali agents that may be suitably used in the invention include, but are not limited to, sodium hydroxide, sodium carbonate, sodium aluminate, sodium metasilicate, sodium phosphate, potassium hydroxide and lithium hydroxide.

No particular limitation is imposed on the alkali etching conditions, although it is preferable to carry out such treatment under conditions that result in an amount of aluminum dissolution within a range of from 0.05 to 30 g/m$^2$ The other conditions are also not subject to any particular limitation. However, the alkali concentration is preferably from 1 to 50 wt%, and more preferably from 5 to 30 wt%; the temperature of the alkali is preferably from 20 to 100°C, and more preferably from 30 to 50°C; and the treatment time is preferably from 2 to 60 seconds.

Such alkali etching treatment is not limited to one type of method, and may instead be composed of a plurality of steps used in combination.

Moreover, alkali etching is not limited to a one-step treatment. For example, a typical sequence following mechanical graining might involve carrying out alkali etching then desmutting (the subsequently described acid pickling operation for removing smut), followed by, in order, electrolytic graining then, once again, alkali etching and desmutting. In this way, alkali etching and desmutting may each be carried out in combination a plurality of times.

(Desmutting Treatment)

In the present invention, following alkali etching treatment, acid pickling (desmutting) may be carried out to remove smut remaining on the surface of the aluminum substrate.

Examples of acids that may be used for this purpose include nitric acid, sulfuric acid, phosphoric acid, chromic acid, hydrofluoric acid and tetrafluoroboric acid. Preferred examples of methods that may be used for removing smut following electrolytic graining treatment include the methods described in JP 53-12739 A; i.e., a method in which the aluminum substrate is brought into contact with 15 to 65 wt% sulfuric acid at a temperature of 50 to 90°C for a period of 30 seconds to 2 minutes, and a method in which the aluminum substrate is brought into contact with 5 to 65 wt% nitric acid at a temperature of 30 to 70°C for a period of 30 seconds to 2 minutes.

In the practice of the invention, the aluminum substrate, by being subjected if necessary to the above-described surface area-increasing treatment, has a surface enlarging ratio as measured by the BET method of preferably at least 1.2, more preferably from 1.2 to 120, and even more preferably from 1.5 to 55.

At a surface enlarging ratio within the above range, the surface area of the anodized layer that is formed by subsequently described anodizing treatment (A) can be further increased, enabling a fine catalyst body of even higher functionality to be provided as a functional material.

The "surface enlarging ratio" is defined herein as the BET specific surface area ratio between an aluminum substrate following surface area-increasing treatment and a smooth aluminum plate that has not been subjected to surface area-increasing treatment (treated substrate/smooth substrate). In the present invention, values below the detection sensitivity in BET specific surface area measurement (i.e., cases where the measured value is not more than 0.01 mm$^2$ (surface enlarging ratio of not more than 10)) were computed from the specific surface area ratio after both an aluminum substrate subjected to surface area-increasing treatment and a smooth aluminum substrate not subjected to surface area-increasing treatment were anodized by constant-voltage electrolytic treatment under identical conditions so as to form an anodized layer having a thickness of from 0.05 to 0.2 $\mu$m. It is preferable to use carbon or platinum-coated titanium as the cathode.

"Smooth aluminum substrate not subjected to surface area-increasing treatment" refers herein to an aluminum substrate having a surface roughness Ra, as defined in JIS B0601-1994, of 0.2 $\mu$m or less.

The BET method is a technique which involves adsorbing a substance for which the occupied surface area on adsorption is known to the surface of a test specimen at the temperature of liquid nitrogen, and determining the surface area of the specimen from the amount of the adsorbed substance.

In the present invention, the BET method may be carried out in the usual way. For example, it may be carried out while referring to pages 167-168 of Shokubai Jikken Handobukku [Handbook of catalyst experiments], ed. by Catalysis Society of Japan (Kodansha Ltd., 1989).

The instrument used in the BET method may be any commercially available instrument intended for this purpose, without particular limitation. Illustrative examples include FlowSorb manufactured by Shimadzu Corporation, and Autosorb manufactured by Quantachrome Instruments.

Nitrogen, krypton, or an organic compound such as benzene or toluene may be used as the adsorbate. Of these, nitrogen or a mixed gas of nitrogen and helium is commonly used. When the surface area is relatively small, krypton gas is used.

It is preferable to pre-treat the aluminum substrate whose specific surface area is to be measured by the BET method. The pretreatment conditions preferably consist of heating at 200 to 500°C for 1 to 4 hours in a vacuum. Advantageous use may also be made of a method in which the aluminum substrate is held in a vacuum, then heated within a stream of inert gas.

The adsorption time in the BET method varies with the BET surface area and the size of the test specimen. For example, at a specimen size of 25×20 mm, the adsorption time will generally be in a range of from 30 minutes to 15 hours. Desorption is carried out over a desorption time of generally about 5 to 10 minutes.

[Anodizing Treatment (A)]

Anodizing treatment may be carried out using, for example, a method in which current is passed through the substrate as the anode in a solution having an acid concentration of from 1 to 10 wt%. The substrate is anodized on one or both sides. Anodizing treatment on both sides is preferable because a substrate treated on both sides incurs little deformation at high temperature. The solution used in anodizing treatment is preferably an acid solution. Solutions of sulfuric acid, phosphoric acid, oxalic acid, citric acid, malonic acid, tartaric acid, sulfamic acid, benzenesulfonic acid and amidosulfonic acid are more preferred, and solutions of sulfuric acid, phosphoric acid, oxalic aid, citric acid, malonic acid and tartaric acid are even more preferred. These acids may be used alone or as combinations of two or more thereof.

The electrolytic solution has a concentration of generally from 0.1 to 12 mol/L, preferably from 0.2 to 10 mol/L, and more preferably from 0.3 to 8 mol/L.

The temperature of the electrolytic solution may be set as appropriate within a range of generally from 10 to 70°C, preferably from 15 to 60°C, and more preferably from 20 to 60°C.

The electrical conductivity of the electrolytic solution is generally from 30 to 400 mS/cm, preferably from 40 to 300 mS/cm, and more preferably from 50 to 200 mS/cm.

The current density is generally from 0.1 to 300 A/dm$^2$, preferably from 0.3 to 250 A/dm$^2$, and more preferably from 0.5 to 200 A/dm$^2$.

The voltage, which is generally applied as a direct current, is typically from 3 to 500 V, although a preferred range may be selected as appropriate according to the type of electrolytic solution. For example, a voltage of from 10 to 30 V is preferred for aqueous solutions of sulfuric acid, a voltage of 150 to 210 V is preferred for aqueous solutions of phosphoric acid, a voltage of 30 to 60 V is preferred for aqueous solutions of oxalic acid, a voltage of 230 to 250 V is preferred for aqueous solutions of citric acid, a voltage of 100 to 140 V is preferred for aqueous solutions of malonic acid, and a voltage of 180 to 210 V is preferred for aqueous solutions of tartaric acid.

It is desirable for the anodized layer to have a thickness of from 0.2 to 10 μm. The thickness is preferably at least 0.2 μm but less than 10 μm, more preferably from 0.3 to 5 μm, and even more preferably from 0.4 to 3 μm. Within this range, a high exhaust gas purifying efficiency can be achieved using a small amount of precious metal.

It is desirable for the treatment time to be within a range of from 10 seconds to 10 minutes, preferably from 20 seconds to 8 minutes, and more preferably from 30 seconds to 5 minutes. Within this time range, control in a continuous treatment operation is easy.

Aside from being carried out in an electrolytic bath containing from 3 to 12 mol/L of sulfuric acid, anodizing treatment is not subject to any particular limitation. For example, any suitable method known to the art may be used.

In the practice of the invention, the sulfuric acid concentration in the electrolytic solution used for anodizing treatment is typically from 3 to 12 mol/L, preferably from 3 to 11 mol/L, and more preferably from 4 to 6 mol/L.

In the invention, the treatment voltage in anodizing treatment is preferably from 2 to 300 V, more preferably from 5 to 250 V, and even more preferably from 9 to 200 V.

At a treatment voltage within this range, the micropores on the anodized layer which is formed by this anodizing treatment have a suitable density.

Moreover, the treatment time in anodizing treatment according to the invention is preferably from 0.5 to 600 minutes, more preferably from 0.8 to 60 minutes, and even more preferably from 1 to 30 minutes.

At a treatment time within this range, the anodized layer which is formed by anodizing treatment has a suitable thickness.

In the invention, the treatment temperature in anodizing treatment is preferably from 5 to 80°C, more preferably from 10 to 60°C, and even more preferably from 20 to 55°C.

At a treatment temperature within this range, the anodized layer which is formed by anodizing treatment has a suitable rate of formation.

In the invention, the micropore diameter is preferably from 1.5 to 250 nm, more preferably from 4 to 210 nm and even more preferably from 7 to 170 nm. The thickness of the anodized layer following anodizing treatment is preferably from 0.5 to 40 μm, more preferably from 0.8 to 20 μm, and even more preferably from 1 to 10 μm.

At a thickness within the above range, the anodized layer formed by anodizing treatment is able to achieve a sufficient specific surface area, enabling expanded use in a variety of applications. The thickness of the anodized layer, being approximately proportional to the amount of electricity applied in treatment, may be adjusted by suitably selecting the treatment time and the current density.

In the invention, the weight of the anodizing layer formed by anodizing treatment is preferably from 2 to 140 $g/m^2$, more preferably from 2.5 to 70 $g/m^2$, and even more preferably from 3 to 30 $g/m^2$.

At an anodizing layer weight within the above range, it is possible to support the minimum required amount of the costly metal element at a high concentration on the relatively thin layer, enabling a fine catalyst body of even higher functionality to be provided as a functional material. The weight of the anodized layer can be calculated from the change in weight of the anodized aluminum substrate before and after 1 to 12 hours of immersion in a 50°C treatment solution of chromic acid and phosphoric acid.

Alternatively, the weight of the anodized layer may instead be measured directly by dissolving and removing only the metallic aluminum by a known technique involving the use of, for example, a mixed aqueous solution of bromine and ethanol or a mixed aqueous solution of hydrochloric acid and cupric chloride.

By carrying out the anodizing treatment described here, the surface area of the resulting anodized layer proper can be increased, enabling a fine catalyst body of even higher functionality to be provided as a functional material.

The reason appears to be that, because the sulfuric acid concentration of the electrolytic solution is in the above-indicated range, a higher concentration of $SO_4^{2-}$ ions is taken up by the anodized layer, giving the anodized layer a three-dimensional porous structure, which increases the specific surface area.

[Dissolution Treatment (B)]

Dissolution treatment (B) is a treatment in which a portion of the anodized layer formed by the above-described anodizing treatment (A) is dissolved with an acidic aqueous solution or an alkaline aqueous solution. Dissolution treatment is carried out, if necessary, to further increase the surface area of the anodized layer proper and to suppress a decline in surface area over time in the hydration treatment (C) and the functional material filling treatment that are optionally carried out following anodizing treatment (A). Also, this ability of dissolution treatment to suppress a decline in the surface area enables temporary storage and other non-regular treatment to be carried out.

In cases where an acidic aqueous solution is used in dissolution treatment (B), the electrolytic solution employed in the above-described anodizing treatment may be used. Specifically, the use of an aqueous solution of sulfuric acid, oxalic acid, phosphoric acid, tartaric acid, malonic acid, citric acid or chromic acid, or a mixture thereof, is preferred. Of these, the use of an aqueous solution of sulfuric acid, oxalic acid or phosphoric acid is preferred on account of availability and the ease of wastewater treatment.

In the practice of the invention, the acidic aqueous solution has a concentration of preferably from 1 to 30 wt%, more preferably from 2 to 20 wt%, and even more preferably from 3 to 15 wt%. The acidic aqueous solution has a pH of preferably from 1 to 5, more preferably from 1.5 to 4.5, and even more preferably from 2 to 4. The acidic aqueous solution has a temperature of preferably from 5 to 50°C, more preferably from 10 to 45°C, and even more preferably from 15 to 40°C. The treatment time using the acidic aqueous solution is preferably from 0.1 to 30 minutes, more preferably from 0.5 to 20 minutes, and even more preferably from 1 to 10 minutes.

At an acidic aqueous solution concentration, pH, temperature and treatment time in the above-indicated ranges, the anodizing layer obtained following dissolution treatment (B) exhibits a three-dimensional porous structure, further improving the specific surface area.

If, instead, an alkaline aqueous solution is employed in dissolution treatment (B), preferred use may be made of an aqueous solution of a sodium salt such as sodium hydroxide, trisodium phosphate or sodium carbonate; an aqueous solution of a potassium salt such as potassium hydroxide; or an aqueous solution of a lithium salt such as lithium hydroxide. Of these, the use of an aqueous solution of a sodium salt is preferred on account of availability and the ease of wastewater treatment.

In the invention, the alkaline aqueous solution has a concentration of preferably from 0.05 to 20 wt%, more preferably from 0.08 to 10 wt%, and even more preferably from 0.1 to 5 wt%. The alkaline aqueous solution has a pH of preferably from 8 to 13, more preferably from 8.5 to 12, and even more preferably from 9 to 11.5. The alkaline aqueous solution has a temperature of preferably from 5 to 50°C, more preferably from 10 to 45°C, and even more preferably from 15 to 40°C. The treatment time using the alkaline aqueous solution is preferably from 0.1 to 30 minutes, more preferably from 0.5 to 20 minutes, and even more preferably from 1 to 10 minutes.

At an alkaline aqueous solution concentration, pH, temperature and treatment time in the above-indicated ranges, the anodizing layer following dissolution treatment (B) exhibits a three-dimensional porous structure, further improving the specific surface area.

Dissolution of a portion of the anodized layer is carried out by bringing the anodized layer into contact with the above-described acidic aqueous solution or alkaline aqueous solution.

Examples of suitable contacting methods include, but are not limited to, immersion and spraying. Of these, an immersion method is preferred.

The immersion method involves treatment in which the aluminum substrate obtained following anodizing treatment (A) is immersed in the above-described alumina dissolving solution.

The treatment time when carrying out such contacting is preferably from 0.1 to 30 minutes, more preferably from 0.5 to 20 minutes, and even more preferably from 1 to 10 minutes.

By carrying out such dissolution treatment (B) on an aluminum substrate that has been subjected to the above-described anodizing treatment (A), the surface area of the anodized layer formed can be further increased, enabling a fine catalyst body of even higher functionality to be provided as a functional material.

The reason appears to be that, as is apparent from the subsequently described practical examples of the invention, compared with the anodized layer formed using the aqueous solution of sulfuric acid having an acid concentration of 0.5 to 1.7 mol/L commonly used in the production of a lithographic printing plate support, the anodized layer formed by the anodizing treatment (A) has a high pore density, and the thickness of the walls between the micropores is small. Moreover, owing to the high concentration of sulfuric acid ions within the anodized layer, numerous openings form through the sidewalls of the micropores when dissolution treatment (B) is carried out, resulting in a three-dimensional porous catalyst body.

[Hydration Treatment (C)]

Hydration treatment (C) is a treatment which is optionally carried out, after anodizing treatment (A) or dissolution treatment (B) following this anodizing treatment (A), so as to form a hydrate at the interior of the micropores on the anodized layer formed by anodizing treatment. Its purpose is to increase the surface area of the anodized layer, and thereby achieve a higher functionality as a functional material.

In the present invention, hydration treatment (C) is preferably carried out using an aqueous solution of a reaction accelerator having a temperature of below 40°C and a pH of from 8 to 12. At a temperature and pH in the above ranges, the treatment efficiency is excellent, and blockage of the micropore openings on the anodizing layer is prevented. The temperature of the aqueous solution is preferably at least 5°C, more preferably from 10 to 35°C, and even more preferably from 20 to 30°C. The pH of the solution is preferably from 9.5 to 11.5, and more preferably from 10.5 to 11.

Specific examples of the reaction accelerator include ammonia, triethanolamine, sodium hydroxide, potassium hydroxide, nickel acetate, cobalt acetate, sodium silicate, and potassium dichromate. These may be used singly or as combinations of two or more thereof. Of the above, from the standpoint of the efficiency of hydration treatment, the use of at least one selected from the group consisting of ammonia, triethanolamine, sodium hydroxide, potassium hydroxide and sodium silicate is preferred, the use of ammonia and/or sodium silicate is more preferred, and the use of ammonia is even more preferred.

The amount of reaction accelerator in the aqueous solution is generally from 1 to 50 wt%, preferably from 3 to 40 wt%, and more preferably from 5 to 30 wt%.

The hydration treatment time is preferably from 0.5 to 30 minutes, more preferably from 1 to 20 minutes, and even more preferably from 2 to 10 minutes.

Hydration treatment conditions within the above-indicated ranges are desirable because fine topographic features are formed on the inside of the micropores, enabling the surface area to be increased, in addition to which the blockage of micropore openings can be prevented.

By carrying out such hydration treatment (C) on an aluminum substrate that has been subjected to the above-described anodizing treatment (A) and dissolution treatment (B), the surface area of the anodized layer formed can be further increased, enabling a fine catalyst body of even higher functionality to be provided as a functional material.

The reason appears to be that, as is evident from the subsequently described examples of the invention, compared with the anodized layer formed using the aqueous solution of sulfuric acid having an acid concentration of 0.5 to 1.7 mol/L commonly used in the production of a lithographic printing plate support, the anodized layer formed by the above-described anodizing treatment (A) has a very high surface area owing to the formation by hydration treatment (C) of a finely divided hydration product thought to be boehmite at the interior of the micropores.

[Fine Catalyst Body]

The fine catalyst body of the invention can be obtained by the above-described inventive method of manufacturing a fine catalyst body.

The inventive catalyst body preferably has an average micropore density of from 50 to 10,000 pores/$\mu m^2$, and the micropores preferably occupy from 20 to 80% of the surface area.

In the fine catalyst body of the invention, because alumina or a hydrate thereof has been formed on the surface of metallic aluminum, the far-infrared emissivity is larger, enabling the catalyst body to be advantageously used as, for example, a heating zone, a heating element, a freshness-preserving material or an inner wall material in refrigerators.

Additionally, the fine catalyst body of the invention, owing to the large BET specific surface area and excellent electrical conductivity of the aluminum substrate, may be used as, for example, a lightweight sound insulation or soundproofing material, a vibration damping material, an electromagnetic wave shield, a heat propagating material or a catalyst carrier.

<NOx Adsorption and Storage Material>

Examples of metal oxides having the ability to adsorb NOx include oxides of potassium (K), barium (Ba), lanthanum (La), calcium (Ca), lithium (Li), cerium (Ce), zirconium (Zr), praseodymium (Pr), neodymium (Nd), terbium (Te), samarium (Sm), gadolinium (Gd), strontium (Sr), sodium (Na), cesium (Cs), and mixtures of two or more thereof.

Preferred examples include oxides of potassium (K), barium (Ba), lanthanum (La), calcium (Ca), lithium (Li), cerium (Ce), zirconium (Zr), praseodymium (Pr), neodymium (Nd), terbium (Te), samarium (Sm), gadolinium (Gd) and sodium (Na).

Oxides of barium (BaO) and cerium ($CeO_2$) are more preferred.

<Method of Forming NOx Adsorbent>

The method of forming an NOx adsorbent layer on the anodized aluminum substrate of the invention may be

1) an immersion method in which the anodized aluminum substrate is immersed in an aqueous solution of a nitrate or acetate salt of cerium or barium, for example; or may involve
2) coating the anodized layer with a colloidal solution (sol) of a NOx adsorbent.

A colloidal solution (sol) of the NOx adsorbent may be formed under the conditions described below. Further details are given in Shin Kagaku Jikken Koza 18: Kaimen to Koroido [New Experiments in Chemistry (18): Interfaces and Colloids] (1979), pp. 323-328.

2-1) Heating Method

An aqueous solution of any of nitrates, sulfates or hydrochlorides of the respective metal ions is heated to effect hydrolysis.

2-2) Hydrolysis of Organic Metal Compound

Examples of the organic metal include $M(OR)_m$, where R is an alkyl, acyl or alkoxyalkyl group and the letter m is the same value as the charge number of the metal M. M, which is exemplified by metals such as cerium, aluminum, silicon, titanium, zirconium, antimony, tantalum, germanium and aluminum, may be a single metal or a mixture of two or more metals. Preferred examples of M include cerium, aluminum, silicon and zirconium. M is more preferably cerium or aluminum.

Hydrolysis is typically carried out at a temperature of from 0 to 100°C, at a metal oxide concentration of from 1 to 70 wt%, and with the addition of water and/or an alcohol. The amount of water and/or alcohol added is from 1 to 100 times the weight of the hydroxide. An inorganic acid or organic acid may also be included in an amount of from 0.1 to 50 parts by weight per 100 parts by weight of the overall hydrolysis bath.

The hydrolysis conditions are preferably a temperature of from 10 to 50°C, and a metal oxide concentration of from 1 to 50 wt%. The amount of inorganic acid or organic acid included per 100 parts by weight of the overall hydrolysis bath is preferably from 0.1 to 20 parts by weight.

2-3) Neutralization Method

In the method of neutralization, an alkali is added to an aqueous solution of the nitrate, sulfate or hydrochloride of the respective metal ions, following which precipitation and drying are carried out. Preferably, an alkali is added to an aqueous solution of nitrate salts of the respective metal ions, after which precipitation and drying are effected. The alkali is preferably KOH or $NH_3$, and is preferably set to a pH of from 6 to 12.

Either the anodized layer is immersed in the solution to be precipitated in the neutralization method or the solution is applied to the anodized layer, following which precipitation and drying are effected within the micropores. Alternatively, dried precipitate may be filled into micropores of the anodized layer.

Precipitation is carried out at a nitrate salt concentration of from 0.0001 to 5 mol/L, at a solution temperature of from 0 to 100°C, and for a period of from 0.5 hour to 10 weeks. Preferably, the solution temperature is from 10 to 90°C, and the length of treatment is from 0.5 hour to 4 weeks. More preferably, the solution temperature is from 10 to 80°C, and the length of treatment is from 0.5 hour to 2 weeks.

2-4) Freeze-Drying Method

A colloidal gel obtained by neutralization or the like is frozen at -5°C or below and dried for 48 hours in a vacuum of 20 hPa or below, preferably frozen at -20°C or below and dried for 24 hours in a vacuum of 10 hPa or below, and more preferably frozen at -30°C or below and dried for 12 hours in a vacuum of 60 hPa or below. Alternatively, the anodized layer may be coated with or immersed in the colloidal sol in liquid form, then freeze dried, or the freeze-dried product may be filled into micropores of the anodized layer.

Preferred methods of forming the colloidal sol include neutralization, hydrolysis and freeze drying. Neutralization is especially preferred.

Examples of conditions for coating and drying the colloidal sol on the anodized layer include a coating amount of from 1 to 20 $cc/m^2$ with a solution having a solids concentration of from 1 to 60 wt%, and a drying temperature of from 95 to 200°C; preferably a coating amount of from 3 to 15 $cc/m^2$ with a solution having a solids concentration of from 5 to 55 wt%, and a drying temperature of from 110 to 200°C; and more preferably a coating amount of from 5 to 15 $oc/m^2$ with a solution having a solids concentration of from 10 to 50 wt%, and a drying temperature of from 120 to 180°C.

The amount per unit thickness (micrometer) of the anodized aluminum layer in which at least one selected from the group consisting of potassium (K), barium (Ba), lanthanum (Za), calcium (Ca), lithium (Li), cerium (Ce), zirconium (Zr), praseodymium (Pr), neodymium (Nd), terbium (Te), samarium (Sm), gadolinium (Gd) and lanthanum (La) is supported at the interior of micropores on the anodized aluminum layer is preferably at least 0.01 $g/m^2/\mu m$.

<Method of Supporting the Metal or Metal Oxide Having a Catalytic Activity on the Anodized Layer>

Illustrative examples of compounds having a catalytic activity include palladium (Pd), platinum (Pt), rhodium (Rh), ruthenium (Ru), iridium (Ir), silver (Ag) and gallium (Ga); ammonia complexes and nitrate salts of platinum, silver, palladium, copper and iridium; and alkoxides of gallium and indium. Additional examples include $In_2O_3$ and $Ga_2O_3$ Of the above, silver, $In_2O_3$ and $Ga_2O_3$ are known to undergo little deterioration in catalytic activity even in the presence of sulfur compounds (SCx) and water vapor. Moreover, platinum is known to have a particularly good activity at low temperatures. Ammonia complexes and nitrate salts of platinum, silver and iridium are preferred. Ammonia complexes and nitrate salts of platinum and silver are especially preferred.

The method for impregnating the anodized layer with an ammonia complex or nitrate salt may involve impregnation with a solution having a concentration of from 0.01 to 5 mol/L at a treatment temperature of from 15 to 50°C for a period of from 0.5 to 180 minutes. Impregnation with a solution having a concentration of from 0.01 to 3 mol/L at a treatment, temperature of from 20 to 40°C for a period of from 1 to 90 minutes is preferred. Impregnation with a solution having a concentration of from 0.01 to 1 mol/L at a treatment temperature of from 20 to 30°C for a period of from 5 to 30 minutes is more preferred.

When an alkoxide is used, impregnation is carried out with a solution having a metal oxide concentration of from 1 to 70 wt% at a treatment temperature of from 0 to 100°C for a period of from 0.5 to 180 minutes. Impregnation with a solution having a concentration of from 1 to 60 wt%, and especially from 1 to 50 wt%, at a treatment temperature of from 10 to 50°C for a period of from 1 to 90 minutes is preferred.

The amount per unit thickness (micrometer) of the anodized aluminum layer in which at least one metal selected from the group consisting of palladium (Pd), platinum (Pt), rhodium (Rh), ruthenium (Ru), iridium (Ir), silver (Ag) and gallium (Ga) is supported at the interior of micropores on the anodized aluminum layer is preferably at least 0.15 $g/m^2/\mu m$.

When platinum is supported, it is desirable to use as the amount of supported platinum the value obtained by dissolving the whole substrate with aqua regia and dissolving everything else with dilute nitric acid, then determining the concentration of the target metal by quantitative analysis using an instrumental analysis technique for inorganic aqueous solutions, such as atomic absorption spectroscopy or inductively coupled plasma (ICP) spectrometry.

When the thickness of the anodized layer is 10 $\mu$m or more, an eddy current film thickness gauge is preferred. When the thickness is less than 10 $\mu$m, measurement by scanning electron microscope (SEM) examination of the fracture plane in a specimen that was broken by bending is preferred.

<Porous Material Having the Ability to Adsorb Ammonia>

Examples of the porous material having the ability to adsorb ammonia which is used in the catalyst body of the invention include materials composed of $V_2O_5$ or $WO_3$ supported on a $TiO_2$ carrier that are known as denitration catalysts, and zeolites.

1) Denitration Catalysts

It is well-known that ordinary denitration catalysts (e.g., $V_2O_5$ supported on a $TiO_2$ carrier) have an ammonia adsorbing/desorbing ability (see, for example, paragraph [0013] of JP 5-146634 A). Moreover, JP 5-337336 A states that when ammonia is added to an exhaust gas and the gas is brought into contact with a denitration catalyst, the level of nitrogen oxides decreases due to decomposition.

Ammonia storage materials have the property of adsorbing or desorbing ammonia depending on the temperature. Specifically, ammonia storage materials have a composition that includes one or more oxides selected from the group consisting of the various oxides of aluminum, silicon, zirconium and titanium (e.g., $Al_2O_3$, $SiO_2$, $ZrO_2$ $TiO_2$). From ammonia temperature-programmed desorption (TPD) curves for these oxides, it was found that the peak in the "amount of desorbed ammonia/initial amount of adsorbed ammonia" for each oxide fell in a range of from 200 to 300°C. That is, when an ammonia storage material is at above 300°C, the amount of ammonia adsorption is very small. Hence, when the temperature of an ammonia storage material is raised, most of the ammonia that has until now been adsorbed thereon desorbs. Conversely, when the temperature of an ammonia storage material is lowered from a high-temperature state above 300°C, an ammonia-adsorbing action occurs.

2) Inorganic Components Having Acidity

The catalyst body may include one or more components from among zeolite, silica ($SiO_2$) titania ($TiO_2$) silica-alumina ($SiO_2 \cdot Al_2O_3$), copper (Cu), cobalt (Co), nickel (Ni) and iron (Fe) as the ammonia-adsorbing component within or on micropores in the anodized layer.

3) Zeolite-Containing Porous Material

After forming, at the interior of the micropores on the anodized layer or on the surface of the anodized layer, the above-described layer containing a metal oxide having the ability to adsorb NOx and a metal or oxide having a catalytic activity, it is preferable to additionally form, either at the interior of the micropores or on the surface of the anodized layer, a hard zeolite layer of high porosity by applying a coating liquid composed primarily of zeolite and a binder (phosphoric acid). In some cases, colloidal silica particles may be added. Zeolites are composed of aluminosilicates of alkali metals or alkaline earth metals, and particularly sodium. The basic skeletal structure is a three-dimensional network in which oxygens are shared by regular tetrahedrons of $SiO_4$ and $AlO_4$, although the crystal structure is known to have many forms. The inclusion within the crystal of cations such as alkali metal ions, alkaline earth metal ions, ammonia ions, and hydrogen ions (H-type zeolite) enables the zeolite to retain electrical neutrality. The ability for these cations to be replaced with other cations by a suitable ion-exchange process is familiar as one of the key features of zeolites. Zeolites may be broadly divided into naturally occurring zeolites and synthetic zeolites. Natural zeolites include, for example, analcite, natrolite, heulandite, clinoptilolite, phillipsite, mordenite, chabazite and faujasite. However, many amorphous zeolites, other zeolites of a different nature, or non-zeolite crystals such as feldspar and quartz are included, as a result of which natural zeolites generally have a low crystallinity. Synthetic zeolites are typically synthesized by a hydrothermal reaction using a silica source, alumina source, alkali metal source or alkaline earth metal source. Advantages of synthetic zeolites are a good component uniformity and a high crystallinity. Hence, many types of synthetic zeolites have hitherto been provided, including A-type, B-type, D-type, X-type, Y-type, Z-type and β-type zeolites. X-type and Z-type synthetic zeolites present many practical problems: they have a $SiO_2/Al_2O_3$ molar ratio (referred to below as "SAOR") of from 2 to 5 and thus contain a large amount of aluminum, in addition to which they have a low heat resistance, decompose under acidic conditions (e.g., hydrochloric acid, sulfuric acid), decompose even under steam conditions in regeneration, and undergo a loss of catalytic activity in a short time. In general, a zeolite with a high SAOR provides the advantages of a high heat resistance and little coke formation. This is why zeolites having a high aluminum content, i.e., a large SAOR, have been developed. The synthetic zeolite ZSM-5 has a SAOR of at least 20, and thus contains a proper amount of aluminum. It has a high heat resistance and a high steam resistance and is able, for example, to adsorb from 10 to 30 times as much ammonia as carbon. JP 2002-356323 A teaches that zeolites which can be widely employed in chemical reactions on hydrocarbons and other large molecules have also been developed, including the synthetic zeolite [A1]-SSZ-31 which has 12-membered ring pores of large diameter and a large surface area.

Formation of this zeolite layer is preferably carried out by, for example, mixing liquids A and B below, then coating and drying (at 120 to 180°C) so as to convert alumina sites in the zeolite to aluminum phosphate and thus form a bonding layer. Liquid A: zeolite powder + 85 wt% phosphoric acid + citric acid Liquid B: $AlCl_3$ (reaction accelerator)

The zeolite particles used, while not subject to any particular limitation, have an average particle size of preferably from 0.05 to 5 $\mu$m, more preferably from 0.08 to 1 $\mu$m, and even more preferably from 0.1 to 0.5 $\mu$m. To increase the surface roughness, particles of two or more different average particle sizes may be included. In such a case, the first type of zeolite particles has an average particle size of preferably from 0.05 to 5 $\mu$m, more preferably from 0.08 to 1 $\mu$m,

and even more preferably from 0.1 to 0.5 $\mu$m. The second type of zeolite particles has an average particle size which is preferably from 2 to 50 times, more preferably from 3 to 20 times, and even more preferably from 4 to 10 times, the average particle size of the first type of zeolite particles. By admixing the second type of particles, it is possible to impart the desired surface roughness. The use of a mordenite-type or a Y-type zeolite having an excellent ammonia adsorptivity is preferred, although it is also possible to use a natural zeolite. Specific examples include zeolites having a relatively large amount of silica components, such as the HSZ series manufactured by Tosoh Corporation. Preferred use may be made of the mordenite-type zeolite 640HOA, and the Y-type zeolites 331HSA and 341NHA. The higher the ammonia TPD (mmol/g), the better the ammonia adsorptivity. Various types of fine zeolite particles may be used in commercial form.

The content of zeolite particles in the coating liquid is adjusted as appropriate for the desired porosity and thickness, although a content of from 35 to 55 wt% is preferred, and a content of from 40 to 50 wt% is even more preferred. The phosphoric acid content in the coating liquid used, while not subject to any particular limitation, is preferably from 0.05 to 12 wt%, more preferably from 0.1 to 10 wt%, and even more preferably from 0.3 to 8 wt%.

If necessary, a reaction accelerator may be added to the coating liquid. The reaction accelerator is exemplified by, but not limited to, aluminum chloride. When aluminum chloride is used as the reaction accelerator, the content within the coating liquid, while not subject to any particular limitation, is preferably from 0.05 to 12 wt%, and more preferably from 0.1 to 10 wt%.

It is desirable to include also in the coating liquid any of various types of dispersants for uniformly dispersing the zeolite in water. The dispersant is not subject to any particular limitation, although a compound that is known as a zeolite dispersant, such as citric acid or sodium hexametaphosphate, may generally be used. The content of dispersant in the coating liquid, while not subject to any particular limitation, is typically from 0.1 to 1 wt%, preferably from 0.2 to 0.8 wt%, and more preferably from 0.2 to 0.5 wt%.

The layer has an average thickness of preferably from 1 to 50 $\mu$m, more preferably from 3 to 40 $\mu$m, and even more preferably from 5 to 30 $\mu$m. At less than 1 $\mu$m, the catalytic activity may be too low. On the other hand, at more than 50 $\mu$m, further effects are not attainable. The porosity is preferably from 5 to 70%, more preferably from 10 to 60%, and even more preferably from 15 to 50%. At less than 5%, the catalytic activity declines. On the other hand, at more than 50%, the mechanical strength may be too low.

"Zeolite" is a general name for aluminosilicates having micropores in the crystals. Zeolites are originally naturally occurring minerals, and contain water at the interior. They are used as molecular sieves, ion exchange materials, catalysts and adsorbents. Today, zeolites having various characteristics are made synthetically. Zeolites are based on a skeleton made of silicon dioxide. By substituting some of the silicon with aluminum, the overall crystal lattice becomes negatively charged. As a result, cations such as sodium are included within the micropores, thereby achieving a balance of electrical charges. Because zeolites are able to selectively take up molecules within the micropores and cause them to react, they are widely used as catalysts. For example, gasoline is successfully synthesized from methanol by using the synthetic zeolite ZSM-5. Zeolites have also shown promise as catalysts for decomposing and removing NOx present in diesel exhaust. Naturally occurring zeolites arise from the interaction of lava and water, and are found primarily in thermal regions. They form within pillow lava or deep in the ocean, and also arise from contact between volcanic ash strata and subterranean water. As of 1996, some 52 different types of zeolites have been identified.

Zeolites having particles ranging in size from about 0.1 $\mu$m to several centimeters are commercially sold, with those of smaller particle size being more expensive. Today, commercial zeolites have particle sizes down to about 100 nm. Because this is large relative to the 10 nm diameter of micropores in the anodized layer, such particles are unable to enter the interior of the pores.

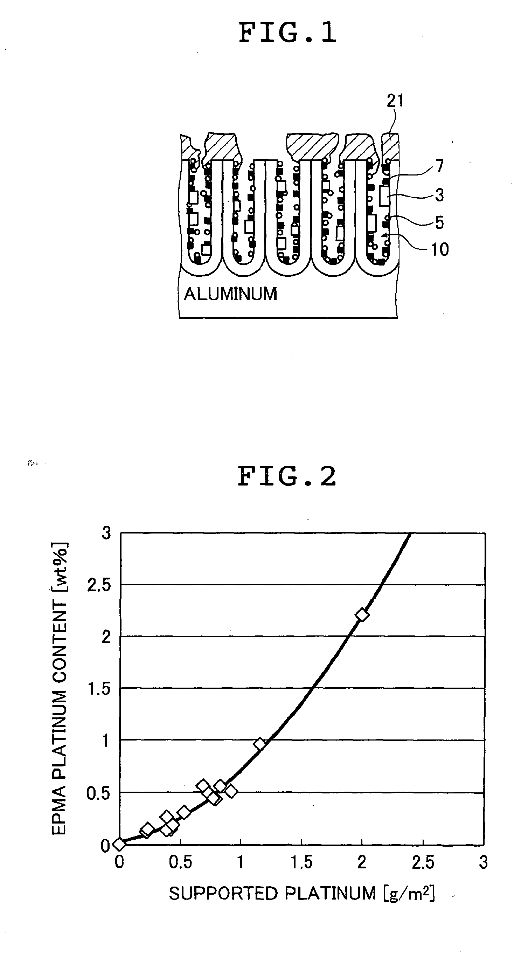

However, it has been observed that when a zeolite film is created by a hydrothermal synthesis reaction between a binder and an aluminosilicate gel, some very fine particles do form therein, a portion of those sometimes being observed at the interior of micropores in the anodized layer (see FIG. 1).

<Method of Forming a Porous Material Having the Ability to Adsorb Ammonia>

The method used to form, within and on pores of the anodized layer, a layer containing zeolite and, as the binder, phosphoric acid and/or colloidal silica and/or boehmite sol may entail coating the anodized aluminum substrate with a liquid slurry containing a mixture of these ingredients, or immersion in a similarly composed slurry. Coating methods that may be used include wire bar coating, spray coating, blade coating and dip coating. The coated film is then dried at a temperature of from 100 to 300°C, and baked at a temperature of from 250 to 500°C. A drying temperature of from 100 to 250°C and a baking temperature of from 280 to 500°C is preferred. A drying temperature of from 100 to 200°C, and a baking temperature of from 300 to 400°C is more preferred.

<Embodiment of the Catalyst Body of the Invention>

An embodiment is described below to illustrate the NOx removing action achieved with the catalyst body of the invention.

The catalyst body of the invention may be used as the catalyst in a NOx purifying unit. In such a case, it is preferable to provide an ammonia-producing catalyst on the upstream side of the NOx purifying apparatus. When the exhaust gas is in a reducing atmosphere (rich state), the ammonia producing catalyst reduces nitrogen dioxide ($NO_2$) and forms nitrogen ($N_2$), water ($H_2O$) and ammonia ($NH_3$) via the following chemical reactions (1) and (2).

$$2NO_2 + 4H_2 \rightarrow N_2 + 4H_2O \qquad (1)$$

$$2NO_2 + 7H_2 \rightarrow 2NH_3 + 4H_2O \qquad (2)$$

The catalyst body of the invention includes, for example, platinum (Pt) which acts as a catalyst and ceria or barium having a NOx adsorbing ability, both of which are supported on an anodized layer ($\gamma$-$Al_2O_3$) obtained by subjecting a substrate having an aluminum surface to anodizing treatment.

A zeolite having the ability to hold ammonia ($NH_3$) within the exhaust as ammonium ions ($NH_4^+$) is also provided on the anodized layer.

The NOx present in the exhaust, the NOx (NO, $NO_2$) adsorbed onto the ceria (and platinum), and the hydrogen that has formed react under the action of the catalyst to form ammonia ($NH_3$) and water. That is, the following chemical reactions (3) and (4) take place.

$$2NO_2 + 7H_2 \rightarrow 2NH_3 + 4H_2O \qquad (3)$$

$$2NO_2 + 5H_2 \rightarrow 2NH_3 + 2H_2O \qquad (4)$$

The ammonia that has formed is adsorbed onto the zeolite in the form of ammonium ions ($NH_4^+$).

NOx adsorbs onto the ceria or boehmite hydrate. In addition, once the ammonium ions have been adsorbed onto the zeolite, as shown in the formulas (5) and (6) below, the NOx and oxygen in the exhaust gases react with ammonia to form nitrogen ($N_2$) and water.

$$4NH_3 + 4NO + O_2 \rightarrow 4N_2 + 6H_2O \qquad (5)$$

$$2NH_3 + NO + NO_2 \rightarrow 2N_2 + 3H_2O \qquad (6)$$

<Example of Method for Controlling an Internal Combustion Engine>

An example is described of a method for controlling an internal combustion engine when cleaning up the NOx in exhaust gases using the catalyst body of the invention. The inventive catalyst body is not limited to this method; any suitable control method may be used.

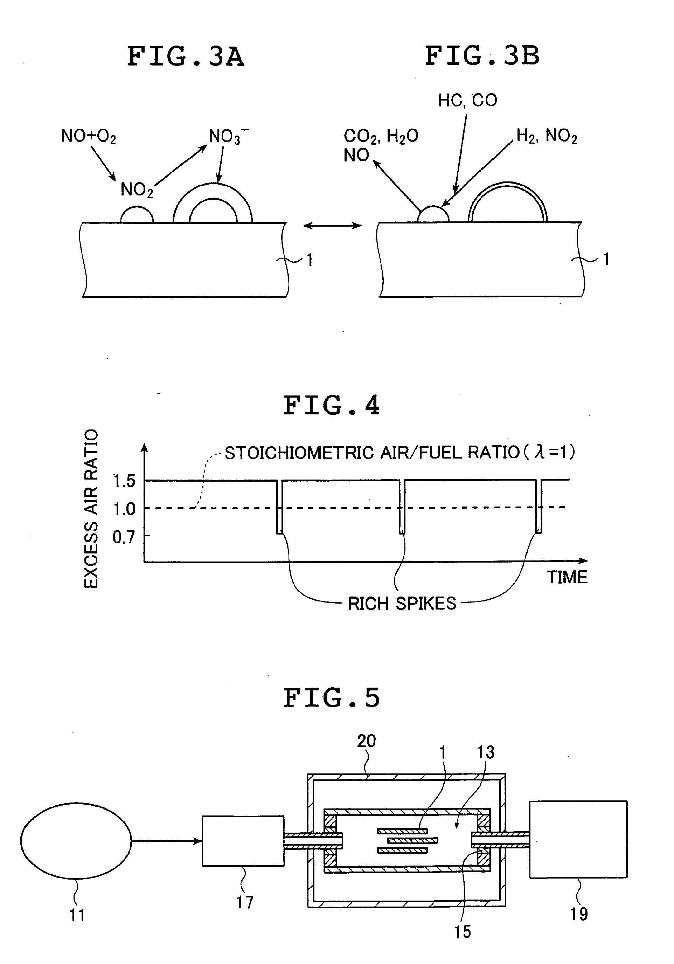

FIG. 3(A) is a schematic diagram depicting the manner in which nitrogen oxides NOx (only nitrogen monoxide NO is shown as a typical example) in exhaust gases are adsorbed onto a catalyst body 1 composed of the inventive catalyst body during lean burn (excess air ratio $\lambda$ = 1.5) by an internal combustion engine. FIG. 3(B) is a schematic diagram of the reactions on the catalyst body 1 at the stoichiometric air/fuel ratio in an internal combustion engine (excess air ratio $\lambda$ = 1.0; stoichiometric air/fuel ratio in gasoline engines and diesel engines). The excess air ratio during lean burn is not limited to 1.5, and may be set as desired while taking into account variations in the manufacture of the internal combustion engine, the conditions of use, and other factors.

The catalyst 1 is installed in an exhaust line (not shown). When the excess air ratio is in a lean state (lean burn), oxygen ions $O_2^-$ or $O^{2-}$ react with $NO_x$ on the catalyst body 1, forming nitrate ions $NO_3^-$. The nitrate ions $NO_3^-$ adsorb to the surface of the catalyst body 1, forming a nitrate salt.

When the nitrate salt on the catalyst body 1 reaches a saturated state, as shown in FIG. 4, the excess air ratio is made somewhat smaller than $\lambda$ = 1.0, allowing the engine to run in a rich state for 5 or 6 seconds, and thus causing the nitrate to react with unburned hydrocarbons and CO present in the exhaust gas. As a result, the nitrate salt on the catalyst body 1 is decomposed and reduced to $N_2$, $CO_2$ and $H_2O$, in which form it can be eliminated (this is referred to below as a "rich spike"). After a rich spike has been introduced, the excess air ratio is once again set to a lean state ($\lambda$ = 1.5).

When the nitrate on the catalyst body 1 is in a saturated state, the catalyst body 1 can no longer store NOx, as a result of which a large amount of NOx enters the exhaust gas stream. In one possible arrangement, the presence of NOx in the exhaust is detected by a NOx sensor positioned on the downstream side of the exhaust line from the catalyst body 1 and a rich spike is introduced, thereby reducing nitrate on the catalyst body 1 and enabling new NOx to be stored. In another possible arrangement, an oxygen sensor is provided on the upstream or downstream side of the catalyst body 1 so as to measure the oxygen concentration, and the amount of excess air adjusted based on signals from the oxygen sensor.

The internal combustion engine operating mode in which a lean state and rich spikes are repeated alternately is referred to as the "storage catalyst mode."

EXAMPLES

<Manufacture of the Catalyst Body>

Graining treatment, anodizing treatment, dissolution treatment and hydration treatment under the conditions shown in Tables 1-1 and 1-2 below were successively carried out on the indicated substrates, thereby giving fine catalyst bodies. In the tables, a hyphen (--) indicates that the treatment in question was not carried out.

Table 1-1

| Example (Treatment No.) | Substrate | Anodizing treatment | | | | | | Dissolution treatment | | Hydration treatment | NOx storage material/ catalyst |
|---|---|---|---|---|---|---|---|---|---|---|---|
| | | Solution type | Concentration (mol/L) | Temperature (°C) | Voltage (V) | Time (min) | Film thickness ($\mu$m) | Condition | Time (min) | Time (min) | Supporting condition |
| 1 | A | sulfuric acid | 3 | 33 | 10 | 1.5 | 0.8 | A | 1 | 8 | NO1/PT1 |
| 2 | A | sulfuric acid | 4.5 | 33 | 10 | 1.5 | 1.5 | A | 1 | 8 | NO1/PT1 |
| 3 | A | sulfuric acid | 6 | 33 | 10 | 1.5 | 2 | A | 1 | 8 | NO1/PT1 |
| 4 | A | sulfuric acid | 8 | 33 | 10 | 1.5 | 2.8 | A | 1 | 8 | NO1/PT1 |
| 5 | A | sulfuric acid | 10 | 33 | 10 | 1.5 | 2.8 | A | 1 | 8 | NO1/PT1 |
| 6 | A | sulfuric acid | 12 | 33 | 10 | 1.5 | 2.5 | A | 1 | 8 | NO1/PT1 |
| 7 | C | sulfuric acid | 4.5 | 33 | 10 | 1.5 | 0.3 | A | 1 | 8 | NO1/PT1 |
| 8 | F | sulfuric acid | 4.5 | 33 | 10 | 1.5 | 0.3 | A | 1 | 8 | NO1/PT1 |
| 9 | I | sulfuric acid | 4.5 | 33 | 10 | 1.5 | 1.5 | A | 1 | 8 | NO1/PT1 |
| 10 | A | oxalic acid | 1 | 90 | 40 | 10 | 9 | A | 10 | -- | NO1/PT1 |
| 11 | A | oxalic acid | 1 | 90 | 40 | 10 | 9 | A | 10 | 45 | NO1/PT1 |
| 12 | A | phosphoric acid | 0.2 | 2 | 195 | 70 | 9 | A | 10 | 90 | NO1/PT1 |

Table 1-2

| Example (Treatment No.) | Substrate | Anodizing treatment | | | | | | Dissolution treatment | | Hydration treatment | NOx storage material/ catalyst |
|---|---|---|---|---|---|---|---|---|---|---|---|
| | | Solution type | Concentration (mol/L) | Temperature (°C) | Voltage (V) | Time (min) | Film thickness ($\mu$m) | Condition | Time (min) | Time (min) | Supporting condition |
| 13 | A | sulfuric acid | 4.5 | 33 | 10 | 1.5 | 1.5 | A | 1 | 8 | NO2/PT1 |
| 14 | A | sulfuric acid | 4.5 | 33 | 10 | 1.5 | 1.5 | A | 1 | 8 | NO3/PT1 |
| 15 | A | sulfuric acid | 4.5 | 33 | 10 | 1.5 | 1.5 | A | 1 | 8 | NO4/PT1 |
| 16 | A | sulfuric acid | 4.5 | 33 | 10 | 1.5 | 1.5 | A | 1 | 8 | PT1/NO1 |
| 17 | A | sulfuric acid | 4.5 | 33 | 10 | 1.5 | 1.5 | A | 1 | 8 | PT1/NO2 |
| 18 | A | sulfuric acid | 4.5 | 33 | 10 | 1.5 | 1.5 | A | 1 | 8 | PT1/NO3 |
| 19 | A | sulfuric acid | 4.5 | 33 | 10 | 1.5 | 1.5 | A | 1 | 8 | PT1/NO4 |
| 20 | A | sulfuric acid | 4.5 | 33 | 10 | 1.5 | 1.5 | A | 1 | 8 | NO1/AG1 |
| 21 | A | sulfuric acid | 4.5 | 33 | 10 | 1.5 | 1.5 | A | 1 | 8 | NO2/AG1 |
| 22 | A | sulfuric acid | 4.5 | 33 | 10 | 1.5 | 1.5 | A | 1 | 8 | NO1/AG2 |
| 23 | A | sulfuric acid | 4.5 | 33 | 10 | 1.5 | 1.5 | A | 1 | 8 | NO2/AG2 |

(1) Substrate

The following substrates were used in the manufacture of catalyst bodies. Prior to use, the substrates were cut to enable anodizing treatment over a 5x10 cm treatment surface area.

Substrate A was prepared by contacting an aluminum substrate (JIS A1050 material; purity, 99.5 wt%; thickness, 0.3 mm) for 2 minutes with a 60°C aqueous solution of sulfuric acid having a concentration of 25 wt%.

Substrate B was prepared by contacting an aluminum substrate (JIS 1N99 material; purity, 99.99 wt%; thickness, 0.4 mm) for 2 minutes with a 60°C aqueous solution of sulfuric acid having a concentration of 25 wt%.

Substrate C was prepared by subjecting a degreased substrate (above Substrate B) to 1 hour of heat treatment at 350°C in an argon atmosphere, then carrying out pore-widening treatment (electrolytic graining treatment) under the conditions shown below in Table 2. A heat-treated sample masked on the back with oriented polypropylene (OPP) pressure-sensitive tape (manufactured under the trade name Dunplonpro No. 375A by Nitto Denko Corporation) was used as the anode, and platinum-coated titanium was used as the cathode.

Substrate F was prepared by subjecting a degreased substrate (above Substrate A) to 1 hour of heat treatment at 350°C in an argon atmosphere, then carrying out pore-widening treatment (electrolytic graining treatment) under the conditions shown below in Table 2. A heat-treated sample masked on the back with OPP pressure-sensitive tape (Dunplonpro No. 375A; Nitto Denko Corporation) was used as the anode, and platinum-coated titanium was used as the cathode.

Table 2

| Substrate | Degreased substrate | Type of electrolytic solution | Concentration of electrolytic solution (wt%) | Temperature (°C) | Current density (A/dm$^2$) | Treatment time (min) |
|---|---|---|---|---|---|---|
| C | B | hydrochloric acid | 4.5 | 80 | 7.5 | 2 |
| F | A | hydrochloric acid | 4.5 | 80 | 7.5 | 2 |

Substrate I was obtained by recycling an unused lithographic printing plate. That is, first, a commercial presensitized plate for lithographic printing (produced by FUJIFILM Corporation under the trade name HP-F) was immersed for 30 minutes in an organic solvent (γ-butyrolactone), following which it was rinsed with methyl ethyl ketone, thereby substantially dissolving the image-recording layer. Next, the plate was immersed for 20 minutes in a 30°C aqueous solution of 5% phosphoric acid, thereby giving Substrate I on which most of the anodized layer (quantitative determination of oxygen from Compton scattered radiation; x-ray source, Rh-Lα) and organic matter (elemental carbon) are not detectable with an x-ray fluorescence spectrometer

(2) Anodizing Treatment

Anodizing treatment was carried out on the surfaces of Substrates A, C, F and I under the conditions shown in Tables 1-1 and 1-2. That is, anodizing treatment was carried out using electrolytic solutions of the sulfuric acid concentrations and at the temperatures, voltages and treatment times shown in Tables 1-1 and 1-2, thereby forming anodized layers of the thicknesses shown in Tables 1-1 and 1-2. In anodizing treatment, use was made NeoCool BD36 (Yamato Scientific Co., Ltd.) as the cooling system, Pairstirrer PS-100 (manufactured by Tokyo Rikakikai Co., Ltd.) as the stirring and warming unit, and a GP0650-2R unit (Takasago, Ltd.) as the power supply. In addition, the average flow rate of the electrolytic solution was measured using the vortex flow monitor FLM22-10PCW manufactured by As One Corporation.

The thickness of the anodized layer was measured using an eddy current film thickness gauge (EDY-1000, manufactured by Sanko Electronic Laboratory Co., Ltd.).

(3) Dissolution Treatment

Condition A: The aluminum substrate following anodizing treatment was immersed for the length of time shown in Tables 1-1 and 1-2 within a pH 3, 30°C aqueous solution containing 5 wt% phosphoric acid, thereby dissolving a portion of the anodized layer.

(4) Hydration Treatment

The aluminum substrate following anodizing treatment (following dissolution treatment in examples where dissolution treatment was carried out) was immersed for the length of time shown in Tables 1-1 and 1-2 within PH 11 ammonia water having a temperature of 25°C. The substrate was then baked at 500°C for 3 hours in an electric furnace.

(5) NOx Storage Material and Catalyst Supporting Treatment

Table 3

| Symbol | Treatment | NOx storage material | Catalyst | NOx storage material | Amount supported (catalyst/ storage material) |
|--------|-----------|----------------------|----------|----------------------|-----------------------------------------------|
| NO1/PT1 | 2 | NO1 | PT1 | -- | 1.7/0.4 |
| NO2/PT1 | 13 | NO2 | PT1 | -- | 1.3/0.4 |
| NO3/PT1 | 14 | NO3 | PT1 | -- | 1.3/0.5 |
| NO4/PT1 | 15 | NO4 | PT1 | -- | 1.3/0.8 |
| PT1/NO1 | 16 | -- | PT1 | NO1 | 1.7/0.5 |
| PT1/NO2 | 17 | -- | PT1 | NO2 | 1.4/0.6 |
| PT1/NO3 | 18 | -- | PT1 | NO3 | 1.9/1.0 |
| PT1/NO4 | 19 | -- | PT1 | NO4 | 1.4/1.5 |
| NO1/AG1 | 20 | NO1 | AG1 | -- | 0.7/0.7 |
| NO2/AG1 | 21 | NO2 | AG1 | -- | 0.8/1.6 |
| NO1/AG2 | 22 | NO1 | AG2 | -- | --/2.1 |
| NO2/AG2 | 23 | NO2 | AG2 | -- | --/1.5 |

The NOx storage materials and catalysts were supported in the orders shown in Table 3. For the sake of simplicity, the amount supported was determined by carrying out total qualitative analysis with an electron probe microanalyzer (EPMA). In addition to aluminum, oxygen, phosphorus and sulfur, NOx storage material and catalyst were detected (units: wt%).

The measurement conditions were as follows: apparatus, JXA-8800 (JEOL Ltd.); acceleration voltage, 20 kV; irradiation current, $10^{-7}$ A; dwell time, 150 ms; magnification, 1000x.

Conversions between the amount of supported platinum ($g/m^2$) and the EPMA intensity may be carried out using a working curve obtained from a reference sample. For example, in the case of platinum, FIG. 2 shows a working curve which was obtained for a specimen that had been anodized on one side to an anodized layer thickness of 3 $\mu$m).

In cases where the anodized layer has a thickness of not more than 3 $\mu$m, after carrying out total qualitative analysis by EPMA of metal elements such as silver, cerium and barium in the same way as described above for platinum, without complete dissolution, it is possible to determine to a good sensitivity the amounts of these metals supported from working curves.

Table 4

| Symbol | Treatment conditions |
|--------|----------------------|
| PT1 | 5 minutes immersion at 25°C in 1 g/L aqueous solution of hexachloroplatinic acid adjusted to pH 11.4 with ammonia water, followed by rinsing with water and 1 hour bake at 400°C in electric furnace. |
| AG1 | 3 minutes immersion at 25°C in 0.4 M aqueous solution of silver nitrate adjusted to pH 11 with ammonia water, followed by 1 hour bake at 400°C in electric furnace. |
| AG2 | 10 minutes immersion at 25°C in 0.4 M aqueous solution of silver nitrate, followed by 1 hour bake at 400°C in electric furnace. |

(continued)

| Symbol | Treatment conditions |
|--------|---------------------|
| NO1 | 10 minutes immersion at 25°C in 0.5 M aqueous solution of cerium acetate, followed by 1 hour bake at 400°C in electric furnace. |
| NO2 | 10 minutes immersion at 25°C in 1 M aqueous solution of cerium nitrate, followed by 1 hour bake at 400°C in electric furnace. |
| NO3 | 10 minutes immersion at 25°C in 0.5 M aqueous solution of barium acetate, followed by 1 hour bake at 400°C in electric furnace. |
| NO4 | 10 minutes immersion at 25°C in 0.1 M aqueous solution of barium nitrate, followed by 1 hour bake at 400°C in electric furnace. |

Catalyst (Pt) was supported on the Treatment No. 1 to 19 substrates.

Platinum Supporting Treatment Method

1) Treatment Nos. 1 to 9

Hexachloroplatinic acid (Wako Pure Chemical Industries, Ltd.) was dissolved in pure water to a platinum content of about 1 g/L, and the resulting solution was adjusted to a pH of 11.4 with ammonia water. The substrate was immersed therein for 5 minutes at 25°C.

2) Treatment Nos. 10 and 11

Aside from changing the immersion time to 45 minutes, treatment was carried out in the same way as in Treatment Nos. 1 to 9.

3) Treatment No. 12

Aside from changing the immersion time to 90 minutes, treatment was carried out in the same way as in Treatment Nos. 1 to 9.

4) In Treatment Nos. 13 to 23, catalyst support was carried out as shown in Table 3.

Catalyst (Boehmite sol + Ag) Support

Treatment No. 24

Boehmite sol + Ag Support Treatment Method

An aluminum and silver-containing nitrate salt solution was prepared to a silver content of 1 g/L and a silver ratio, based on the combined amount of aluminum and silver, of 80 mol %. Aluminum nitrate nonahydrate (Kanto Chemical Co., Inc.; reagent grade) was used as the aluminum starting material, and silver nitrate (Kanto Chemical; reagent grade) was used as the silver starting material. Next, 28% ammonia water (Kanto Chemical; reagent grade) containing the amount of $NH_3$ required to induce precipitation of these nitrate salts was furnished. The ammonia water was mixed into the nitrate salt solution under stirring until the solution pH reached 11. Stirring was continued for 10 hours. A substrate treated in the same way as in Treatment No. 4 up to hydration treatment was immersed therein for 8 minutes at 25°C.

Catalyst (Ag + Ceria) Support

Treatment No. 25

A cerium and silver-containing nitrate salt solution was prepared to a silver content of 1 g/L and a silver ratio, based on the combined amount of cerium and silver, of 80 mol %. Cerium nitrate hexahydrate was used as the cerium starting material, and silver nitrate was used as the silver starting material. Next, 25% ammonia water containing the amount of $NH_3$ required to induce precipitation of these nitrate salts was furnished. The ammonia water was mixed into the nitrate salt solution under stirring until the solution pH reached 11. Stirring was continued for 10 hours. A substrate treated in the same way as in Treatment No. 4 up to hydration treatment was immersed therein for 8 minutes at 25°C.

Catalyst (Pt + Ceria) Support

Treatment No. 26

A cerium and platinum-containing nitrate salt solution was prepared to a platinum content of 1 g/L and a platinum ratio, based on the combined amount of cerium and platinum, of 80 mol %. Cerium nitrate hexahydrate (Kanto Chemical; reagent grade) was used as the cerium starting material, and hexachloroplatinic acid (Kanto Chemical; reagent grade) was used as the platinum starting material. Next, 25% ammonia water containing the amount of $NH_3$ required to induce precipitation of the nitrate salt was furnished. The ammonia water was mixed into the nitrate salt solution under stirring until the solution pH reached 11. Stirring was continued for 10 hours. A substrate treated in the same way as in Treatment No. 4 up to hydration treatment was immersed therein for 8 minutes at 25°C.

Catalyst (Gallium Oxide + Aluminum Oxide) Support

Treatment No. 27

Preparation of a composite oxide (gallium oxide/aluminum oxide) by the alkoxide method

Aluminum isopropoxide ($Al(OC_3H_7)_3$), 12.5 g, was added to 125 ml of hot water held at about 90°C, and stirring was continued for 2 hours with a magnetic stirrer. Next, 2.0 ml of nitric acid ($HNO_3$) was rapidly added dropwise with a pipette to the solution, thereby giving a sol, following which stirring was continued for one hour at about 90°C. Gallium nitrate ($Ga(NO_3)\cdot xH_2O$), 3.10 g, measured out in another beaker was dissolved in 35 ml of ethylene glycol ($(CH_2OH)_2$) at about 70°C, then stirred for one hour at about 70°C. The ethylene glycol solution of gallium nitrate was then added dropwise to the sol solution, and stirring was carried out for 3 hours at about 90°C. The resulting sol solution was stirred for one full day at room temperature, following which a substrate treated in the same way as in Treatment No. 4 up to hydration treatment was immersed therein for 8 minutes at 25°C.

In Example 28, a catalyst body according to the invention was produced by applying a coating of zeolite to the above-described Treatment No. 2 substrate having a layer containing a catalytically active metal or oxide.

(6) Applying a Zeolite Layer

1) Synthetic zeolite produced by Tosoh Corporation under the trade name Y-type Zeolite HSZ-320-NAA (average particle size, 6 $\mu$m), 44.4 g
2) Aluminum chloride (Kanto Chemical; reagent grade), 44.4 g
3) 85 wt% Phosphoric acid (Kanto Chemical; reagent grade), 2.6 g
4) 1 g/L Citric acid, 0.1 g
5) Pure water, 50 g

The synthetic zeolite (produced by Tosho Corp. under the trade name Y-type Zeolite) was immersed in an aqueous solution of copper sulfate (concentration, 1 mol/L) for 1 hour at 25°C, thereby carrying out ion-exchange treatment (A1 → Cu). Above ingredients 1) to 5) were mixed to form a slurry, which was then coated onto the substrate with a commercial wire bar (wire thickness, 0.25 mm). After 10 minutes of drying at 200°C, the thickness of the applied layer was measured. The thickness of the porous layer was found to be 30 $\mu$m.

Comparative Example 1

The same procedure was followed as in Example 1, except that platinum catalyst supporting treatment was not carried out.

Comparative Example 2

The same procedure was followed as in Example 1, except that platinum catalyst supporting treatment and NOx storage material supporting treatment were not carried out.

Comparative Example3

The commercial product X1062AZ produced by Nikki Chemical Co., Ltd. was smashed into small pieces with a hammer and used in a quantity adjusted so that the amount of platinum therein was the same as in Treatment No. 1.

Table 5

| | | X1062AZ |
|---|---|---|
| Form | | Cylindrical shaped product |
| Apparent bulk density (kg/L) | | 0.81 |
| Size | Outside diameter (mm) | 3.0 |
| | Inside diameter (mm) | -- |
| | Height (mm) | 3.0 |
| Average crushing strength | | 56 MPa |
| Specific surface area ($m^2$/g) | | 150 |
| Pore volume ($cm^3$/g) | | 0.35 |
| Composition, % | Platinum | 0.5 |
| | Carrier | $\gamma$-zeolite |

<Measuring the Amount of Silver Supported in AG2>

Treatment No. 22: A substrate 2x3 cm in size was placed in an airtight vessel and dissolved in 50 cc of dilute nitric acid (1 part concentrated nitric acid + 1 part water) at 25°C for 30 minutes. Following 10-fold dilution with pure water, the silver concentration in the solution was measured by the working curve method using an ICP spectrometer (Shimadzu Corporation).
The anodized layer weight (g/$m^2$) was calculated from the change in weight before and after 6 hours of immersion at 50°C in a mixed aqueous solution of chromic acid and phosphoric acid.
The amount of supported silver was found to be 1.6 g/$m^2$.

<Measuring the Amount of Supported Platinum in Treatment No. 2>

A substrate 2x3 cm in size was dissolved in 50 cc of aqua regia (1 part concentrated nitric acid + 3 parts concentrated hydrochloric acid), then treated for 30 minutes in an airtight glass vessel at 150°C, thereby completely dissolving the specimen. Following 10-fold dilution with pure water, the platinum concentration in the solution was measured by the working curve method using an atomic absorption spectrometer (Shimadzu Corporation).
The anodized layer weight (g/$m^2$) was calculated from the change in weight before and after 6 hours of immersion at 50°C in a mixed aqueous solution of chromic acid and phosphoric acid.
The amount of supported platinum was found to be 2 g/$m^2$ of $Al_2O_3$.
Because the commercial product X1062AZ produced by Nikki Chemical Co., Ltd. has a platinum content of 0.5%, 24 mg of pieces thereof--which is the amount containing 0.12 mg of platinum, was used as the specimen for evaluation.

<Evaluation Procedure>

The evaluation method is described below with reference to FIG. 5.
About 10 liters of exhaust gas generated while idling from an old-model diesel automobile (1993 Toyota; engine: 3C-T engine; model: Q-CXR20G, 4-cylinder, SOHC) were collected in a Tedlar Bag 11.
About 10 liters of a NOx model gas (a mixture of NO (0.1 vol%) + $N_2$ (balance) with $O_2$ gas (2 vol%)) was similarly collected in another Tedlar Bag.
Three-centimeter-square specimens of the respective catalyst bodies 1 obtained in Examples 1 to 28 and Comparative Examples 1 to 3 were each cut to a width of about 5 mm, thereby giving six strips measuring 5×30 mm. These were inserted into a quartz tube 13 having an inside diameter of 10 mm, and both ends of the tube were sealed with glass wool 15. The exhaust gas was introduced from the Tedlar Bag through one end of the tube by a metering pump 17, and the NOx level was measured with an NOx analyzer 19 at the other end. The temperature was set in a treatment temperature range of 100 to 300°C with a heater 20. The exhaust gases were sampled every 50°C, and the nitrogen monoxide removal ratio was determined. Comparisons were carried out following reaction. Corrections of the measured values were carried out using the NOx model gas (a mixture of NO (0.1 vol%) + $N_2$ (balance) with $O_2$ gas (2 vol%)).

The NOx analyzer was a CA-6215 Multi-Gas Combination Analyzer manufactured by TSI Inc. Gas delivery was carried out with the metering pump 17 so as to give an SV value (space velocity = quantity of treated gas ($m^3N/hr$) /catalyst volume ($m^3$)) of 20,000 $h^{-1}$.

Assuming that the catalyst body strips are placed within the quartz tube, which has an inside diameter of 10 mm and a cross-sectional surface area of 78.5 $mm^2$, the amount of catalyst in the tube becomes 0.785 cm $\times$ 3 cm $\times$ 3 cm = $7\times10^{-7}$ $m^3$. Therefore, the amount of gas introduced, i.e., the amount of treated gas in $m^3N/hr$ = 20,000 $h^{-1}$ $\times$ $7\times10^{-7}$ $m^3$ = $14\times10^{-3}$ $m^3N/hr$ = 14 L/hr. Hence, in order for 14 L to flow through in one hour, the gas was delivered by the metering pump 17 at a rate of 230 cc/min. The level of NOx collected from the old-model diesel automobile was 500 ppm.

<Calculating the Removal Ratio>

The removal ratios for each of the test gases were computed using the following formula (1):

$$\text{Removal ratio (\%)} = (1 - A/B) \times 100 \qquad (1)$$

where

    A: gas concentration after a given time (ppm)
    B: initial concentration in test gas (ppm).

Method of Evaluating the Zeolite Layer-Coated Catalyst body in Example 28

The molar concentrations of components in the gas to be treated were set as follows: nitrogen monoxide, 0.1%; oxygen, 14%; water vapor, 10%; ammonia, 0.3%. The flow rate of this prepared gas was set to 230 ml/min, and the treatment temperature was set in a range of 100 to 600°C. The NOx present in the exhaust gas following treatment was quantitatively determined, and the nitrogen monoxide removal ratio was calculated.

The inventive catalyst body, even when ammonia was used as the reducing agent, was able to provide a high NOx removal ratio over a broad temperature range in the presence of high-concentration oxygen.

Table 6

| Example | NOx removal ratio at 150°C (%) | NOx removal ratio at 300°C (%) |
|---|---|---|
| Example 1 | 30 | 60 |
| Example 2 | 40 | 75 |
| Example 3 | 50 | 80 |
| Example 4 | 60 | 80 |
| Example 5 | 60 | 80 |
| Example 6 | 60 | 80 |
| Example 7 | 70 | 80 |
| Example 8 | 70 | 70 |
| Example 9 | 40 | 70 |
| Example 10 | 15 | 70 |
| Example 11 | 30 | 70 |
| Example 12 | 20 | 60 |

(continued)

| Example | NOx removal ratio at 150°C (%) | NOx removal ratio at 300°C (%) |
|---|---|---|
| Example 13 | 40 | 75 |
| Example 14 | 40 | 75 |
| Example 15 | 40 | 75 |
| Example 16 | 40 | 75 |
| Example 17 | 40 | 75 |
| Example 18 | 40 | 75 |
| Example 19 | 40 | 75 |
| Example 20 | 5 | 95 |
| Example 21 | 5 | 95 |
| Example 22 | 5 | 95 |
| Example 23 | 5 | 95 |
| Example 24 | 5 | 95 |
| Example 25 | 15 | 95 |
| Example 26 | 40 | 75 |
| Example 27 | 20 | 95 |
| Example 28 | 80 | 80 |
| Comparative Example 1 | 0 | 30 |
| Comparative Example 2 | 0 | 60 |
| Comparative Example 3 | 5 | 30 |

**Claims**

1. A catalyst body comprising an anodized aluminum layer having micropores thereon, wherein inside said micropores are supported:

   at least one element selected from the group consisting of potassium (K), barium (Ba), lanthanum (La), calcium (Ca), lithium (Li), cerium (Ce), zirconium (Zr), praseodymium (Pr), neodymium (Nd), terbium (Te), samarium (Sm) and gadolinium (Gd), and
   at least one element selected from the group consisting of palladium (Pd), platinum (Pt), rhodium (Rh), ruthenium (Ru), iridium (Ir), silver (Ag) and gallium (Ga).

2. The catalyst body of claim 1 which further comprises, on the anodized aluminum layer, a material having the ability to adsorb ammonia.

3. The catalyst body of claim 1 or 2, wherein the ammonia-adsorbing material is a zeolite-containing porous material.

4. The catalyst body of any one of claims 1 to 3, wherein the anodized aluminum layer is obtained by subjecting a substrate having aluminum on a surface thereof to graining treatment, followed by anodizing treatment.

5. The catalyst body of any one of claims 1 to 4, wherein the ammonia-adsorbing material is provided as a layer by coating the anodized aluminum layer with a slurry containing a zeolite and at least one substance selected from the group consisting of phosphoric acid, colloidal silica and boehmite sol.

6. A NOx-removing catalyst body, comprising the catalyst body of any one of claims 1 to 5 in a form that is unchanged or has been rendered into pieces, folded, or reduced in size to small bodies.

# FIG.1

# FIG.2

# FIG.3A

$NO+O_2$

$NO_2$

$NO_3^-$

1

# FIG.3B

$CO_2, H_2O$
$NO$

HC, CO

$H_2, NO_2$

1

# FIG.4

STOICHIOMETRIC AIR/FUEL RATIO ($\lambda = 1$)

EXCESS AIR RATIO

1.5

1.0

0.7

TIME

RICH SPIKES

# FIG.5

20

1  13

17

15

11

19

Europäisches
Patentamt

European
Patent Office

Office européen
des brevets

## EUROPEAN SEARCH REPORT

**Application Number**

EP 08 00 6037

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2006 320893 A (UNIV TOKYO AGRICULTURE) 30 November 2006 (2006-11-30) * paragraph [0010] * * paragraphs [0034] - [0044] * ----- | 1,6 | INV. B01J21/04 B01J23/58 B01J23/63 B01J23/66 B01J29/08 B01J35/00 B01J37/34 B01D53/00 ADD. B01J29/14 |
| A | EP 1 715 085 A (FUJI PHOTO FILM CO LTD [JP]) 25 October 2006 (2006-10-25) * the whole document * ----- | | |
| A | EP 1 745 846 A (FUJI PHOTO FILM CO LTD [JP] FUJIFILM CORP [JP]) 24 January 2007 (2007-01-24) * the whole document * ----- | | |

**TECHNICAL FIELDS SEARCHED (IPC)**

B01J
B01D

The present search report has been drawn up for all claims

| Place of search | Date of completion of the search | Examiner |
|---|---|---|
| Munich | 7 October 2008 | de Cauwer, Robby |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 00 6037

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2008

| Patent document cited in search report | | Publication date | Patent family member(s) | | Publication date |
|---|---|---|---|---|---|
| JP 2006320893 | A | 30-11-2006 | NONE | | |
| EP 1715085 | A | 25-10-2006 | US 2006234396 A1 | | 19-10-2006 |
| EP 1745846 | A | 24-01-2007 | JP 2007021441 A | | 01-02-2007 |
| | | | US 2007021298 A1 | | 25-01-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001276622 A
- JP 2000008909 A
- JP 2006043533 A
- JP 2006183477 A
- JP 2006320893 A
- JP 2001132432 A

- JP 56028893 A
- JP 53012739 A
- JP 5146634 A
- JP 5337336 A
- JP 2002356323 A

**Non-patent literature cited in the description**

- *Keikinzoku,* 1985, vol. 35 (6), 365-371
- Shokubai Jikken Handobukku. Kodansha Ltd, 1989, 167-168

- *Shin Kagaku Jikken Koza 18: Kaimen to Koroido,* 1979, vol. 18, 323-328